(19) Europäisches Patentamt
European Patent Office
Office européen des brevets

(11) **EP 1 616 581 B1**

(12) **EUROPEAN PATENT SPECIFICATION**

(45) Date of publication and mention of the grant of the patent:
**23.12.2009 Bulletin 2009/52**

(51) Int Cl.:
***A61L 15/00*** *(2006.01)*

(21) Application number: **05013153.1**

(22) Date of filing: **17.06.2005**

(54) **Water absorbent resin composition and production method thereof**

Wasserabsorbierende Harzzusammensetzung und Verfahren zur Herstellung derselben

Composition de résine absorbant l'eau et procédé de laquelle

(84) Designated Contracting States:
**BE DE**

(30) Priority: **18.06.2004 JP 2004181595**
**07.07.2004 JP 2004200889**

(43) Date of publication of application:
**18.01.2006 Bulletin 2006/03**

(73) Proprietor: **NIPPON SHOKUBAI CO., LTD.**
**Osaka-shi, Osaka 541-0043 (JP)**

(72) Inventors:
- **Torii, Kazushi**
  **Himeji-shi**
  **Hyogo 671-1242 (JP)**
- **Nakamura, Masatoshi**
  **Himeji-shi**
  **Hyogo 671-1224 (JP)**
- **Okochi, Hiroko**
  **Himeji-shi**
  **Hyogo 671-1227 (JP)**

(74) Representative: **Müller - Hoffmann & Partner**
**Patentanwälte**
**Innere Wiener Strasse 17**
**81667 München (DE)**

(56) References cited:

| | |
|---|---|
| **EP-A- 0 461 613** | **EP-A- 0 481 443** |
| **WO-A-96/38296** | **US-A- 4 224 427** |
| **US-A- 4 416 711** | **US-A- 4 880 455** |
| **US-A- 5 371 148** | **US-A- 5 684 072** |

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 616 581 B1

## Description

FIELD OF THE INVENTION

The present invention relates to (i) a water absorbent resin composition favorably used in sanitary materials such as disposable diapers, sanitary napkins, and so-called incontinence pads, and the like, and (ii) a production method of the water absorbent resin composition.

BACKGROUND OF THE INVENTION

An absorbent core containing a hydrophilic fiber such as pulp and a water absorbent resin as its components is widely used in sanitary materials such as disposable diapers, sanitary napkins, incontinence pads and the like, in order to absorb body fluids.

Recently, the sanitary material has higher performance and a thinner size, and an amount of the water absorbent resin used for each sanitary material tends to increase, and also a ratio of the water absorbent resin tends to increase with respect to the whole absorbent core constituted of the water absorbent resin and a hydrophilic fiber. That is, by using (i) a smaller amount of a hydrophilic fiber whose bulk density is low and (ii) a larger amount of a water absorbent resin having a superior water absorbing property and high bulk density, a ratio of the water absorbent resin contained in the absorbent core is increased, thereby making the sanitary material thinner without decreasing an amount of water absorption.

However, the sanitary material which includes a smaller amount of the hydrophilic fiber and a larger amount of the water absorbent resin is preferable merely in terms of liquid storage, but raises problems in terms of distribution and diffusion of liquid in actual use in diapers. For example, when a large amount of the water absorbent resin is used, the water absorbent resin becomes soft and gelatinous upon absorbing water. This causes a gel blocking phenomenon. As a result, a liquid diffusing property of the diaper significantly drops. In order to avoid such phenomenon and to keep high absorbing property of the absorbent core, a ratio of the hydrophilic fiber and the water absorbent resin is inevitably limited, so that there is a limit in making the sanitary material thinner.

As means for obtaining a water absorbent resin which is superior in liquid permeability and liquid diffusing property while preventing the gel blocking, a technique in which a metal component (metal salt, metal cation, or the like) is added to the water absorbent resin is known.

The technique in which the metal compound is added in an aqueous solution phase is disclosed in various documents (for example, see Japanese Unexamined Patent Publication No. 7745/1987 (Tokukaisho 62-7745)(Publication date: January 14, 1987), Japanese Unexamined Patent Publication No. 270741/1988 (Tokukaisho 63-270741) (Publication date: November 8, 1988), Japanese Unexamined Patent Publication No. 56707/1989 (Tokukaisho 64-56707) (Publication date: March 3, 1989), Japanese Unexamined Patent Publication No. 124879/1997 (Tokukaihei 9-124879) (Publication date: May 13, 1997), Japanese Unexamined Patent Publication No. 96151/2001 (Tokukai 2001-96151) (Publication date: April 10, 2001), International Publication No. 98/49221 pamphlet (Publication date: November 5, 1998), International Publication No. 2000/53644 pamphlet (Publication date: September 14, 2000), International Publication No. 2000/53664 pamphlet (Publication date: September 14, 2000), International Publication No. 2001/74913 pamphlet (Publication date: October 11, 2001), USP No. 2002/0128618 (Publication date: September 12, 2002)). In this technique, metal components more easily permeate the water absorbent resin. Thus, it is impossible to sufficiently improve the liquid permeability and liquid diffusing property so as to correspond to an amount of the metal component added. Further, the metal components permeate the water absorbent resin, so that an absorbency without load and an absorbency against pressure drop.

Further, a technique in which binder such as water is added to a mixture obtained by dry-blending the water absorbent resin with the metal compound is disclosed in various documents (for example, Japanese Unexamined Patent Publication No. 257235/1986 (Tokukaisho 61-257235)(Publication date: November 14, 1986) and International Publication No. 98/48857 pamphlet (Publication date: November 5, 1998)). In this technique, the metal components seep into the binder such as water and permeate the water absorbent resin, so that it is impossible to sufficiently improve the liquid permeability and the liquid diffusion property. Further, damage caused by an impact, friction, etc. in the production process frequently results in occurrence of dusts.

WO 96/38296 A describes a water and moisture resistant corrugated board for use in high humidity packaging applications.

In US-A-5,684,072 a waterborne coating composition with improved smoothness is provided, comprising a polymeric film-forming resin.

US-A-5,371,148 describes reactive polymers having pendant flexible side chains prepared from ethylenically unsaturated carbodiimides.

In EP-A-0 481 443 a transdermal therapeutic composition is described, consisting of a supporting rigid film, a

reserve matrix, an optional adhesive layer and a protective removable sheet.

EP-A-0 461 613 provides an electrically conductive polyester film comprising a polyester base film and a coating layer.

In US-A-4,880,455 a method for the manufacture of slow-release fertilizers by coating fertilizer particles with a layer of a substantially water insoluble polymer possessing a three dimensional structure is described.

US-A-4,416,711 describes an explosive composition having a continuous aqueous phase of sodium perchlorate solution, which is thickended by high amounts of polysaccharide polymer and which acts as a fuel and thickener.

In US-A-4,224,427 a combination of a water-insoluble hydrogel having a cross-linked structure obtained by polymerizing a water-soluble unsaturated monomer and an inorganic metal hydroxide is described.

SUMMARY OF THE INVENTION

An object of the present invention is to provide (i) a water absorbent resin composition, having an excellent absorption capacity represented by a centrifuge retention capacity (CRC), an absorbency against pressure of 4.83 kPa (AAP) etc., having excellent liquid permeability and liquid diffusion properties, having excellent fluidity at the time of moisture absorption, having an excellent damage resistance property, effectively suppressing occurrence of dusts, hardly bringing about segregation of added metal compounds, which water absorbent resin composition contains water absorbent resin particles and a metal compound, and (ii) a production method of the water absorbent resin composition.

As a result of diligent study, the inventors of the present invention found it possible to solve the foregoing problems by making such arrangement that: a water absorbent resin, a bivalent and/or trivalent and/or tetravalent water-soluble metal salt, and a nitrogenous ketone compound are mixed with each other, preferably, a bivalent and/or trivalent and/or tetravalent water-soluble metal salt is added to water absorbent resin particles, and a nitrogenous ketone compound is used together, and a total amount of the bivalent and/or trivalent and/or tetravalent water-soluble metal salt is set to be in a specific range equal to or smaller than an amount of water absorbent resin particles. As a result, they completed the present invention.

Note that, it is known that it is possible to use a water absorbent polymer composition including (i) at least one of alum, aluminum sulfate, dried alum, and dried aluminum sulfate, (ii) urea, and (iii) water absorbent polymer (Japanese Unexamined Patent Publication No. 306609/2003 (Tokukai 2003-306609)(Publication date: October 31, 2003)). The object of this technique is to give the water absorbent polymer an antibiotic property and a deodorant property. Thus, a total amount of (i) at least one of alum, aluminum sulfate, dried alum, and dried aluminum sulfate, and (ii) urea that are contained in the water absorbent polymer composition is large such as 50 to 95 wt % (that is, a weight of these components is equal to or larger than that of the water absorbent polymer). Such composition ratio does not allow the object of the present invention to be achieved.

Further, a water absorbent resin composition containing a water absorbent resin and a tetravalent metal compound is known (Japanese Unexamined Patent Publication No. 96151/2001 (Tokukai 2001-96151)(Publication date: April 10, 2001) and Japanese Unexamined Patent Publication No. 273602/1998 (Tokukaihei 10-273602)(Publication date: October 13, 1998)). The water absorbent resin composition obtained by these techniques does not have sufficient water absorbing property and liquid permeability, so that it is impossible to achieve the object of the present invention at all. The object of the present invention is achieved with the teaching of claims 1 and 6.

That is, a water absorbent resin composition according to the present invention includes: water absorbent resin particles having a cross-linked structure as defined in claim 1 obtained by polymerizing a water-soluble unsaturated monomer; a nitrogenous ketone compound (A) (containing no carboxyl group) having a structure represented by formula (1); and a bivalent and/or trivalent and/or tetravalent water-soluble metal salt, wherein a total amount of the nitrogenous ketone compound (A) and the bivalent and/or trivalent and/or tetravalent water-soluble metal salt ranges from 0.01 to 100 parts by mass with respect to 100 parts by mass of the water absorbent resin particles, wherein the water-soluble unsaturated monomer contains 50 mol% or more of acrylic acid and/or salt thereof and wherein the centrifuge retention capacity (CRC) is 5 g/g or more.

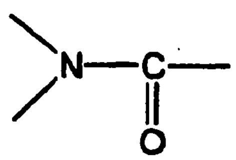 (1)

Further, a method according to the present invention for producing a water absorbent resin composition which includes: water absorbent resin particles having a cross-linked structure as defined in claim 6 obtained by polymerizing

a water-soluble unsaturated monomer; a nitrogenous ketone compound (A) (containing no carboxyl group) having a structure represented by formula (1); and a bivalent and/or trivalent and/or tetravalent water-soluble metal salt is arranged so as to include the step of mixing the water absorbent resin particles, the nitrogenous ketone compound (A), and the bivalent and/or trivalent and/or tetravalent water-soluble metal salt so that a total amount of the nitrogenous ketone compound (A) and the bivalent and/or trivalent and/or tetravalent water-soluble metal salt ranges from 0.01 to 100 parts by mass with respect to 100 parts by mass of the water absorbent resin particles, wherein the water-soluble unsaturated monomer contains 50 mol% or more of acrylic acid and/or salt thereof and wherein the centrifuge retention capacity (CRC) is 5 g/g or more.

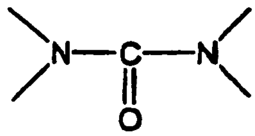

(2)

Further, a method according to the present invention for producing a water absorbent resin composition is arranged so as to include the step of mixing powder of a nitrogenous ketone compound (A) (containing no carboxyl group) having a structure represented by formula (1), powder of a bivalent and/or trivalent and/or tetravalent water-soluble metal salt, and water absorbent resin particles having a cross-linked structure as defined in claim 6 obtained by polymerizing a water-soluble unsaturated monomer, wherein the water-soluble unsaturated monomer contains 50 mol% or more of acrylic acid and/or salt thereof and wherein the centrifuge retention capacity (CRC) is 5 g/g or more.

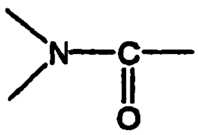

(1)

Further, a method according to the present invention for producing a water absorbent resin composition is arranged so as to include the step of mixing (i) a liquid product containing a nitrogenous ketone compound (A) (containing no carboxyl group) having a structure represented by formula (1) and a bivalent and/or trivalent and/or tetravalent water-soluble metal salt and (ii) water absorbent resin particles having a cross-linked as defined in claim 6. structure obtained by polymerizing a water-soluble unsaturated monomer, wherein the water-soluble unsaturated monomer contains 50 mol% or more of acrylic acid and/or salt thereof and wherein the centrifuge retention capacity (CRC) is 5 g/g or more.

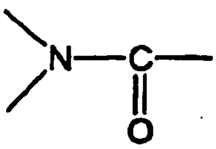

(1)

Further, a method according to the present invention for producing a water absorbent resin composition is arranged so as to include the step of mixing an aqueous solution containing a nitrogenous ketone compound (A) (containing no carboxyl group) having a structure represented by formula (1), an aqueous solution containing a bivalent and/or trivalent and/or tetravalent water-soluble metal salt, and water absorbent resin particle having a cross-linked structure as defined in claim 6 obtained by polymerizing a water-soluble unsaturated monomer, wherein the water-soluble unsaturated monomer contains 50 mol% or more of acrylic acid and/or salt thereof and wherein the centrifuge retention capacity (CRC) is 5 g/g or more.

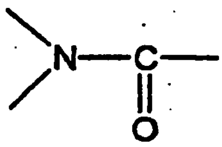

(1)

Further, a method according to the present invention for producing a water absorbent resin composition is arranged so as to include the steps of: mixing (i) one of a nitrogenous ketone compound (A) (containing no carboxyl group) having a structure represented by formula (1) and a bivalent and/or trivalent and/or tetravalent water-soluble metal salt as an aqueous solution and (ii) water absorbent resin particles having a cross-linked structure as defined in claim 6 obtained by polymerizing a water-soluble unsaturated monomer; and dry blending an other of the nitrogenous ketone compound (A) and the bivalent and/or trivalent and/or tetravalent water-soluble metal salt with the water absorbent resin particles, wherein the water-soluble unsaturated monomer contains 50 mol% or more of acrylic acid and/or salt thereof and wherein the centrifuge retention capacity (CRC) is 5 g/g or more.

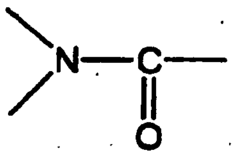

(1)

For a fuller understanding of the nature and advantages of the invention, reference should be made to the ensuing detailed description taken in conjunction with the accompanying drawings.

BRIEF DESCRIPTION OF THE DRAWINGS

Fig. 1 schematically illustrates an apparatus used to measure AAP indicative of one of performances of a water absorbing agent according to the present invention.

Fig. 2 schematically illustrates an apparatus used to measure SFC indicative of one of performances of the water absorbing agent according to the present invention.

DESCRIPTION OF THE EMBODIMENTS

One embodiment of the present invention is described below. The scope of the present invention is not limited to the following embodiment, and the invention may be varied in other manner so as not to depart from the spirit and scope of the invention.

In the following description, a "bivalent and/or trivalent and/or tetravalent water-soluble metal" contained in the water absorbent resin composition according to the present invention is referred to merely as a water-soluble multivalent metal.

[Water Absorbent Resin Particles]

The water absorbent resin particles used in the present invention are particles of a water-insoluble water-swelling hydrogel formation polymer (hereinafter, referred to also as a water absorbent resin) obtained by polymerizing a water-soluble unsaturated monomer which contains 50 mol% or more of acrylic acid and/or salt thereof, and are particles, each having a sphere shape or an irregular shape, whose absorption capacity with respect to a physiological saline (0.90 mass % of NaCl aqueous solution) is not less than 5. Note that, in the present invention, the water absorbent resin particles are referred to also as the water absorbent resin.

Specific examples of the water-insoluble water-swelling hydrogel formation polymer includes: a partially neutralized cross-linked polyacrylic acid polymer (U.S. Patent No. 4625001, U.S. Patent No. 4654039, U.S. Patent No. 5250640, U.S. Patent No. 5275773, European Patent No. 456136, and the like); a cross-linked partially neutralized starch-acrylic acid graft polymer (U.S. Patent No. 4076663); a saponified vinyl acetate-acrylic acid copolymer (U.S.

Patent No. 4124748); a hydrolyzed acrylamide (co)polymer (U.S. Patent No. 3959569); a hydrolyzed acrylonitril copolymer (U.S. Patent No. 3935099); and the like.

It is that the water absorbent resin used in the present invention is particles of a water absorbent resin made of a cross-linked polyacrylic acid (salt) polymer, obtained by polymerizing a monomer containing acrylic acid and/or a salt thereof, which cross-linked polyacrylic acid (salt) polymer contains acrylic acid and/or a salt thereof as a constitutional unit. In the present invention, the cross-linked polyacrylic acid (salt) polymer is a cross-linked polymer obtained by polymerizing a monomer containing not less than 50 mol %, preferably not less than 70 mol %, more preferably not less than 90 mol % of acrylic acid and/or a salt thereof, with respect to all constitutional units. Further, it is preferable that 50 to 90 mol %, preferably 60 to 80 mol % of an acid group contained in the polymer is neutralized, and examples of the salt include: alkali metal salt such as sodium, potassium, and lithium; ammonium salt; and amine salt. The water absorbent resin for forming salt may be neutralized in a monomer phase before polymerization, or may be neutralized during and after polymerization, or these processes may be combined with each other.

The polyacrylic acid (salt) cross-linked polymer which serves as the water absorbent resin particles used in the present invention may be obtained by copolymerizing a monomer (acrylic acid and/or a salt thereof) used as a main component with other monomer as required. Specific examples of other monomer include: an anionic unsaturated monomer such as methacrylic acid, maleic acid, vinyl sulfonic acid, styrene sulfonic acid, 2-(meth)acrylamide-2-methylpropane sulfonic acid, 2-(meth)acryloyloxyethane sulfonic acid, 2-(meth)acryloyloxypropane sulfonic acid, and salt thereof; a nonionic hydrophilic-group-containing unsaturated monomer such as acrylamide, methacrylamide, N-ethyl (meth) acrylamide, N-n-propyl(meth)acrylamide, N-isopropyl(meth)acrylamide, N,N-dimethyl(meth)acrylamide, 2-hydroxyethyl(meth)acrylate, 2-hydroxypropyl (meth)acrylate, methoxypolyethyleneglycol (meth)acrylate, polyethyleneglycol mono (meth)acrylate, vinylpyridine, N-vinylpyrrolidone, N-acryloylpiperidine, N-acryloylpyrrolidine and N-vinylacetamide; and cationic unsaturated monomer such as N,N-dimethylaminoethyl (meth)acrylate, N,N-diethylaminoethyl (meth) acrylate, N,N-dimethylaminopropyl (meth)acrylate, N,N-dimethylaminopropyl (meth)acrylamide, and quaternary salt thereof; and the like. An amount of the monomer other than acrylic acid and/or a salt thereof is 0 to 30 mol %, preferably 0 to 10 mol %, with respect to the whole monomer.

The water absorbent resin particles used in the present invention is a cross-linked polymer having an internal cross-linked structure.

Examples of a method for introducing a cross-linked structure into the water absorbent resin particles used in the present embodiment are as follows: self cross-linking is promoted without using a cross-linking agent; an internal cross-linking agent having two or more polymerizable unsaturated groups and/or two or more reactive groups is copolymerized or reacted with the water absorbent resin particles; and a similar method. It is preferable to copolymerize or react the internal cross-linking agent.

Examples of the internal cross-linking agent include: N,N'-methylenebis(meth)acrylamide, (poly)ethyleneglycol di(meth)acrylate, (poly)propyleneglycol di(meth)acrylate, trimethylolpropanetri(meth)acrylate, trimethylolpropanedi (meth)acrylate, glycerinetri(meth)acrylate, glycerineacrylatemethacrylate, ethyleneoxide denatured trimethylolpropanetri(meth)acrylate, pentaerythritoltetra(meth)acrylate, dipentaerythritolhexa(meth)acrylate, triallyl cyanurate, triallyl isocyanurate, triallyl phosphate, triallyl amine, poly(meth)allyloxyalkane, (poly)ethyleneglycol diglycidyl ether, glycerol diglycidyl ether; polyhydric alcohols such as ethyleneglycol, polyethyleneglycol, propyleneglycol, glycerine, pentaerythritol; ethylenediamine, polyethyleneimine, glycidyl(meth)acrylate, and the like. These internal cross-linking agents may be used either independently or in a suitable combination of two or more kinds. When using one or more internal cross-linking agents, it is preferable that a compound including not less than two polymerizable unsaturated groups is used as the internal cross-linking agent, taking into account the absorption characteristics or other properties of the product water absorbent resin particles. An amount of internal cross-linking agent used is preferably 0.005 to 3 mol %, more preferably 0.01 to 1.5 mol %, with respect to a total number of moles of the whole monomer.

In the polymerization, it is possible to add (i) hydrophilic polymers such as a mixture of starch and cellulose, a derivative of starch and cellulose, polyvinyl alcohol, polyacrylic acid (salt), cross-linked polyacrylic acid (salt), and the like or (ii) a chain transfer agent such as hypophosphorous acid (salt).

In polymerizing the monomer containing acrylic acid and/or a salt thereof as main components so as to obtain the water absorbent resin used in the present embodiment, bulk polymerization, reversed suspension polymerization, or precipitation polymerization may be performed. However, in terms of (i) performance of the water absorbent resin particles and (ii) controllability of polymerization, a more preferable method of polymerization is aqueous polymerization performed under such condition that an aqueous solution of the monomer is used. Such polymerization method is recited for example in U.S. Patent No. 4625001, U.S. Patent No. 4769427, U.S. Patent No. 4873299, U.S. Patent No. 4093776, U.S. Patent No. 4367323, U.S. Patent No. 4446261, U.S. Patent No. 4683274, U.S. Patent No. 4690996, U.S. Patent No. 4721647, U.S. Patent No. 4738867, U.S. Patent No. 4748076, European Patent No. 1178059.

In initiating the polymerization, it is possible to use: a radical polymerization initiator such as potassium persulfate, ammonium persulfate, sodium persulfate, t-butylhydroperoxide, hydrogen peroxide, 2,2'-azobis (2-amidino-propane) dihydrochloride; or an active energy ray such as an ultraviolet ray and an electron ray. Further, in case of using

a radical polymerization initiator, redox polymerization may be carried out by using a reducer such as sodium sulfite, sodium bisulfite, ferrous sulfate, L-ascorbic acid, and the like, together. An amount of polymerization initiators used is preferably 0.001 to 2 mol %, more preferably 0.01 to 0.5 mol %, with respect to the whole monomer.

It is general that a particle shape of thus obtained water absorbent resin particle is an irregularly-pulverized shape, a sphere shape, a fibrous shape, a bar shape, a substantially sphere shape, or an oblate shape. The water absorbent resin particle used in the present invention is particulate. Thus, it is preferable to use an irregularly-pulverized particle obtained by pulverizing the polymer after performing the drying operation since this results in greater effect of the present invention.

It is preferable to cross-link a vicinity of surfaces of the water absorbent resin particles of the present invention.

The surface cross-linking treatment may be performed by using a surface cross-linking agent or may be performed in accordance with other known surface cross-linking treating method.

As the surface cross-linking agent which can be used in the surface cross-linking treatment, it is possible to use an organic surface cross-linking agent or a multivalent metal component which can react with a functional group of the water absorbent resin particles, particularly with a carboxyl group of the water absorbent resin particles, so as to form a cross-linked structure. Particularly, it is preferable to use, for example, the following organic surface cross-linking agents: polyhydric alcohols such as ethyleneglycol, diethyleneglycol, propyleneglycol, triethyleneglycol, tetraethyleneglycol, polyethyleneglycol, 1,3-propanediol, dipropyleneglycol, 2,2,4-trimethyl-1,3-pentandiol, polypropyleneglycol, glycerin, polyglycerin, 2-butene-1,4-diol, 1,3-butandiol, 1,4-butandiol, 1,5-pentandiol, 1,6-hexanediol, 1,2-cyclohexanedimethanol, 1,2-cyclohexanol, trimethylolpropane, diethanolamine, triethanolamine, polyoxypropylene, oxyethlene-oxypropylene block copolymer, pentaerythritol, and sorbitol; epoxy compounds such as ethyleneglycol diglycidyl ether, polyethyleneglycol dyglycidyl ether, glycerol polyglycidyl ether, diglycerol polyglycidyl ether, polyglycerol polyglycidyl ether, propyleneglycol diglycidyl ether, polypropyleneglycol diglycidyl ether, and glycidol; multivalent amine compounds such as ethylenediamine, diethylenetriamine, triethylenetetramine, tetraethylenepentamine, pentaethylenehexamine, and polyethyleneimine, and inorganic salts or organic salts thereof (for example, azetidinium salt and the like); multivalent isocyanate compounds such as 2,4-tolylenediisocyanate, and hexamethylenediisocyanate; multivalent oxazoline compounds such as 1,2-ethylenebisoxazoline; carbonic acid derivatives such as urea, thiourea, guanidine, dicyandiamide, and 2-oxazolidinon; alkylene carbonate compounds such as 1,3-dioxolane-2-one, 4-methyl-1,3-dioxolane-2-one, 4,5-dimethyl-1, 3-dioxolane-2-one, 4,4-dimethyl-1,3-dioxolane-2-one, 4-ethyl-1,3-dioxolane-2-one, 4-hydroxymethyl-1, 3-dioxolane-2-one, 1,3-dioxane-2-one, 4-methyl-1, 3-dioxane-2-one, 4,6-dimethyl-1,3-dioxane-2-one, and 1,3-dioxisopane-2-one; haloepoxy compounds such as epichlorohydrin, epibromohydrin, and a -methylepichlorohydrin, and multivalent amine addition products thereof (for example, Kymene produced by Hercules: registered trademark); silane coupling agents such as $\gamma$-glycidoxypropyltrimethoxysilane and $\gamma$-aminopropyltriethoxysilane; and oxethane compounds such as 3-methyl-3-oxethane methanol, 3-ethyl-3-oxethane methanol, 3-butyl-3-oxethane methanol, 3-methyl-3-oxethane ethanol, 3-ethyl-3-oxethane ethanol, 3-butyl-3-oxethane ethanol, 3-chloromethyl-3-methyloxethane, 3-chloromethyl-3-ethyloxethane, and a multivalent oxethane compound; and the like. These surface cross-linking agents may be used either independently or in a suitable combination of two or more kinds. Among the cross-linking agents, the polyhydric alcohol is preferable since it is superior in terms of safety and it improves the hydrophilic property of the surfaces of the water absorbent resin particles. Further, the polyhydric alcohol is used, so that affinity between the surfaces of the water absorbent resin particles and a water-soluble multivalent metal salt is improved, and a synergy effect between a polyhydric alcohol residue and a surface of the water-soluble multivalent metal salt enables the water-soluble multivalent metal salt to more evenly exist on surfaces of the water absorbent resin particles.

An amount of the surface cross-linking agent used is preferably 0.001 to 5 parts by mass with respect to 100 parts by mass of solid components of the water absorbent resin particles.

In mixing the surface cross-linking agent with the water absorbent resin particles, water may be used. An amount of water to be used is preferably over 0.5 parts by mass and not more than 10 parts by mass, more preferably 1 part by mass to 5 parts by mass, with respect to 100 parts by mass of solid components of the water absorbent resin particles.

In mixing the surface cross-linking agent and aqueous solution thereof, a hydrophilic organic solvent and a third substance may be used as a mixing coadjuvant.

Examples of the hydrophilic organic solvent include: lower alcohols such as methyl alcohol, ethyl alcohol, n-propyl alcohol, isopropyl alcohol, n-butyl alcohol, isobutyl alcohol, and t-butyl alcohol; ketones such as acetone; ethers such as dioxane, tetrahydrofuran, and methoxy(poly)ethyleneglycol; amides such as $\varepsilon$ -caprolactam and N,N-dimethylformamide; sulfoxides such as dimethylsulfoxide; polyhydric alcohols such as ethyleneglycol, diethyleneglycol, propyleneglycol, triethyleneglycol, tetraethyleneglycol, polyethyleneglycol, 1,3-propanediol, dipropyleneglycol, 2,2,4-trimethyl-1,3-pentandiol, polypropyleneglycol, glycerin, polyglycerin, 2-butene-1,4-diol, 1,3-butandiol, 1,4-butandiol, 1,5-pentandiol, 1,6-hexanediol, 1,2-cyclohexanedimethanol, 1,2-cyclohexanol, trimethylolpropane, diethanolamine, triethanolamine, polyoxypropylene, oxyethlene-oxypropylene block copolymer, pentaerythritol, and sorbitol. An amount of the hydrophilic organic solvent varies depending on a type, a particle diameter, a moisture content, and the like of the

water absorbent resin particles. However, the amount of the hydrophilic organic solvent is preferably 10 parts by mass or less, more preferably 0.1 part by mass to 5 parts by mass, with respect to 100 parts by mass of solid components of the water absorbent resin particles. Further, inorganic acid, organic acid, polyamino acid, etc. that are recited in European Patent No. 0668080 as a third substance may exist therein. Such mixing coadjuvant may act as a surface cross-linking agent, but it is preferable to use a substance which prevents a water absorbing performance of the water absorbent resin particles from dropping after performing the surface cross-linking treatment. Particularly, it is preferable to use a volatile alcohol whose boiling point is less than 150°C since the volatile alcohol evaporates at the time of the surface cross-linking treatment so that there is no residue.

In order to evenly mix the water absorbent resin particles with the surface cross-linking agent, non-cross-linking water-soluble inorganic bases (preferably, alkali metal salt, ammonium salt, alkali metal hydride, and ammonia or hydride thereof) or non-reducing alkali metal salt pH buffer (preferably, bicarbonate, dihydrogen phosphate salt, hydrogen phosphate salt, and the like) may coexist in mixing the water absorbent resin particles with the surface cross-linking agent. An amount of these components varies depending on a type, a particle diameter, etc. of the water absorbent resin particles, but preferably ranges from 0.005 to 10 parts by mass, more preferably from 0.05 to 5 parts by mass, with respect to 100 parts by mass of solid components of the water absorbent resin particles.

Various methods can be adopted in mixing the water absorbent resin particles with the surface cross-linking agent, but the following mixing methods may be performed: the water absorbent resin particles are immersed in the hydrophilic organic solvent, and a surface cross-linking agent dissolved in water and/or the hydrophilic organic solvent as required is mixed; the surface cross-linking agent dissolved in the water and/or the hydrophilic solvent is sprayed or dropped directly to the water absorbent resin particles.

Generally, it is preferable that the water absorbent resin is subjected to a heating treatment so as to promote the cross-linking reaction after mixing the water absorbent resin particles with the surface cross-linking agent. Conditions of the heating treatment are as follows. A heating temperature preferably ranges from 40°C to 250°C, more preferably from 150°C to 250°C. In case where the heating temperature is less than 40°C, the absorbing property such as the absorbency against pressure may be insufficiently improved. In case where the heating temperature exceeds 250°C, the water absorbent resin particles deteriorate which causes various performances to drop, so that it is necessary to be careful. A heating time preferably ranges from one minute to two hours, more preferably from five minutes to one hour.

In case where the water absorbent resin particles of the present invention are obtained by performing the heating treatment, the heating treatment is performed for example as follows. As recited in European Patent No. 530517, European Patent No. 603292, International Publication No. 95/05856, the dried water absorbent resin particles are further heated.

A particle diameter and a particle distribution of the water absorbent resin particles used in the present invention are not particularly limited. However, it is preferable to use water absorbent resin particles, having a relatively small particle diameter, in which a large number of small-diameter particles exist. Such water absorbent resin particles remarkably improve the water absorbing performances such as a water absorption rate and the like.

A mass average particle diameter of the water absorbent resin particles used in the present invention is preferably 100 to 600 μm, more preferably 200 to 500 μm. When the mass average particle diameter is out of the range of 100 to 600 μm, the liquid permeability and liquid diffusing property remarkably drop and the absorption rate significantly drop which may result in leakage or the like in case where the water absorbent resin particles are used in a diaper for example. Further, water absorbent resin particles obtained by agglomerating fine powder of water absorbent resin particles whose particle diameter is 300 μm or less may be used, or water absorbent resin particles obtained by mixing part of agglomerated fine powder with irregularly pulverized particles obtained by pulverizing the water absorbent resin may be used. In case where part of agglomerated water absorbent resin particles is mixed, it is possible to obtain a water absorbing agent which is much superior in absorbing properties such as a water absorption rate, a capillary absorption capacity, and the like. An amount of the agglomerated fine powder mixed is preferably 5 mass % or more, more preferably 10 mass % or more, still more preferably 15 mass % or more.

As a method for producing the agglomerated fine powder, it is possible to adopt a known technique for reproducing fine powder. Examples of the technique are as follows: hot water and fine powder of the water absorbent resin particles are mixed with each other and thus obtained mixture is dried (U.S. Patent No. 6228930); fine powder of the water absorbent resin particles is mixed with a monomer aqueous solution and thus obtained mixture is polymerized (U.S. Patent No. 5264495); water is added to fine powder of the water absorbent resin particles and thus obtained mixture is agglomerated at not less than a specific surface pressure (European Patent No. 844270); fine powder of the water absorbent resin particles is sufficiently swollen so as to form a non-crystalline gel and thus obtained non-crystalline gel is dried and pulverized (U.S. Patent No. 4950692); fine powder of the water absorbent resin particles is mixed with a polymerized gel (U.S. Patent No. 5478879); and a similar technique is performed. Among them, it is preferable to adopt the method in which hot water and fine powder of the water absorbent resin particles are mixed with each other and thus obtained mixture is dried. Note that, a particle diameter is indicated by a sieve diameter by which particles are classified.

In the water absorbent resin particles of the present invention, a centrifuge retention capacity (CRC) is 5 (g/g) or more, preferably 10 (g/g) or more, more preferably 20 (g/g) or more, still more preferably 25 (g/g) or more. An upper limit of the centrifuge retention capacity (CRC) is not particularly limited, but is preferably 50 (g/ g) or less, more preferably 45 (g/g) or less, still more preferably 40 (g/g) or less. In case where the centrifuge retention capacity (CRC) is less than 10 (g/g), an amount of absorbed liquid is so small that the water absorbent resin particles are not suitable for use in a sanitary material such as a diaper. Further, in case where the centrifuge retention capacity (CRC) exceeds 50 (g/g), it may be impossible to obtain a water absorbing agent which is superior in liquid permeability.

In the water absorbent resin particles of the present invention, an absorbency against pressure (AAP) (pressure is 4.83 kPa) is preferably 18 g/g or more, more preferably 20 g/g or more, still more preferably 22 (g/g) or more. In case where the absorbent against pressure (AAP) (pressure is 4.83 kPa) is less than 18 g/g, it may be impossible to obtain a water absorbing agent which is superior in liquid permeability.

In the water absorbent resin particles of the present invention, a saline flow conductivity (SFC) is preferably $10(\times 10^{-7} cm^3 \cdot s/g^{-1})$ or more, more preferably $30(\times 10^{-7} cm^3 \cdot s/g^{-1})$ or more, further more preferably $50(\times 10^{-7} cm^3 \cdot s/g^{-1})$ or more. In case where the saline flow conductivity (SFC) is less than $10(\times 10^{-7} cm^3 \cdot s/g^{-1})$, even when the water-soluble multivalent metal salt is added, the liquid permeability may be unimproved.

In the water absorbent resin particles of the present invention, an amount of water-soluble components is preferably 35 mass % or less, more preferably 25 mass % or less, still more preferably 15 mass % or less. When the amount of the water-soluble components exceeds 35 mass %, its gel strength may be low and its liquid permeability may drop. Further, when the water absorbent resin particles are used in a diaper for an extended period of time, its absorbing properties (CRC and AAP) may drop as time elapses.

[Water Absorbent Resin Composition]

The water absorbent resin composition according to the present invention includes: water absorbent resin particles having a cross-linked structure as defined in claim 1 obtained by polymerizing a water-soluble unsaturated monomer; a nitrogenous ketone compound (A) (containing no carboxyl group) having a structure represented by formula (1); and a water-soluble multivalent metal salt, wherein a total amount of the nitrogenous ketone compound (A) and the water-soluble multivalent metal salt ranges from 0.01 to 100 parts by mass with respect to 100 parts by mass of the water absorbent resin particles, wherein the water-soluble unsaturated monomer contains 50 mol% or more of acrylic acid and/or salt thereof and wherein the centrifuge retention capacity (CRC) is 5 g/g or more.

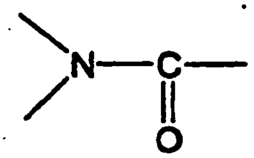 (1)

Note that, it is preferable that the water-soluble multivalent metal salt is bivalent and/or trivalent.

As described above, it is preferable that the water absorbent resin particles having an internal cross-linked structure obtained by polymerizing a water-soluble unsaturated monomer is subjected to a surface cross-linking treatment.

The nitrogenous ketone compound (A) (containing no carboxylic group) has a structure represented by formula (1). Examples of the nitrogenous ketone compound (A) include: carbamic acid alkyl such as carbamic acid methyl and carbamic acid ethyl; carbazic acid alkyl such as carbazic acid ethyl; fatty acid amide such as formamide, acetamide, and propione amide; a compound obtained by replacing nitrogen of an amide group such as N,N-dimethyl acetamide and N-methylacetamide with an alkyl group; acrylamides such as (meth)acrylamide, N-isopropyl acrylamide, and N,N-dimethylacrylamide; 2-oxazolidone; 2-oxazolidinons such as 3-methyl-2-oxazolidinon, 3-alkyl-2-oxazolidinon, 4-methyl-2-oxazolidinon, and 4-alkyl-2-oxazolidinon; oxazolidinedinons such as 2,5-oxazolidinedinon; 2-pyrolidinon, 3-hydroxymethyl-2-pyrolidinon, 3-alkyl-2-pyrolidinon; 2-pyrolidinons such as 4-alkyl-2-pyrolidinon, and 5-alkyl-2-pyrolidinon; pyrolidinedinons such as 2,5-pyrolidinedinon; urea having a structure represented by formula (2) and/or derivative thereof; and the like. It is preferable to use urea having a structure represented by formula (2) and/or derivative thereof. The urea having a structure represented by formula (2) and/or derivative thereof is preferable since a synergy effect between the urea and the water-soluble multivalent metal salt is higher than an effect of the nitrogenous ketone compound (A) having a structure represented by formula (1)

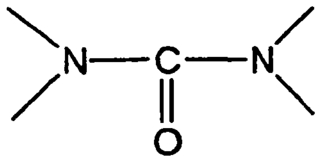

(2)

It is preferable that the nitrogenous ketone compound (A) (preferably, urea having a structure represented by formula (2) and/or derivative thereof) is water-soluble, and its solubility with respect to 100 g of water under conditions of 1 atm and 25°C is preferably 10 g or more, more preferably 20 g or more, still more preferably 40 g or more.

The nitrogenous ketone compound (A) (preferably, urea having a structure represented by formula (2) and/or derivative thereof) has a molecular weight preferably ranging from 45 to 10000 g/mol, more preferably from 59 to 1000 g/mol, still more preferably from 60 to 150 g/mol.

It is preferable that the nitrogenous ketone compound (A) (preferably, urea having a structure represented by formula (2) and/or derivative thereof) is harmless and stable.

Specific and preferable examples of the urea having a structure represented by formula (2) and/or derivative thereof include: urea; urea derivative, in which an alkyl group bonds to nitrogen of urea, such as N-methyl urea, N-ethyl urea, N-N'-dimethyl urea, ethylene urea, and N,N-dimethyl urea; urea derivative, in which a hydroxyl group bonds to nitrogen of urea, such as hydroxy urea, N,N'-dihydroxy urea, N-hydroxy-N'-methyl urea, and N-hydroxy-N-methyl urea; urea derivative, in which a cyano group bonds to nitrogen of urea, such as cyano urea, N-cyano-N'-methyl urea, and N-cyano-N-methyl urea; hydroxymethyl urea; cyanomethyl urea; nitroso urea; hydrazine carboxyamide; carbonicdihydrazide; formyl urea; 1-aziridinecarboxyamide; urea derivative, in which boron bonds to nitrogen of urea, such as N,N'-diboryl urea; urea derivative, in which silicon bonds to nitrogen of urea, such as silyl urea; 1,3-diazetidine-2-one; nitroso urea; 2-propynyl urea; phosphoranyliden urea; ethenyl urea; methylene urea; carbonisocyanatidicamide; 1,2,4-oxadiazetidine-3-one; aminomethyl urea; ethynyl urea; and the like. It is more preferable to use: urea; urea derivative, in which an alkyl group bonds to nitrogen of urea, such as N-methyl urea, N-ethyl urea, N,N'-dimethyl urea, ethylene urea, and N,N-dimethyl urea; urea derivative, in which a hydroxyl group bonds to nitrogen of urea, such as hydroxy urea, N,N'-dihydroxy urea, N-hydroxy-N'-methyl urea, and N-hydroxy-N-methyl urea. It is still more preferable to use: urea; urea derivative, in which an alkyl group bonds to nitrogen of urea, such as N-methyl urea, N-ethyl urea, N,N'-dimethyl urea, ethylene urea, and N,N-dimethyl urea. Among them, it is particularly preferable to use urea since a synergy effect between the urea and the water-soluble multivalent metal salt is particularly high and also its affinity with respect to water is high.

Further, it is preferable that the nitrogenous ketone compound (A) having a structure represented by formula (1) and the urea having a structure represented by formula (2) and/or derivative thereof become a stable and even solution upon being mixed with the water-soluble multivalent metal salt in aqueous solution.

It is preferable that: the bivalent, trivalent, and/or tetravalent water-soluble metal salt is powdery salt of metal whose atomic valence is bivalence, trivalence, and/or tetravalence. In terms of a condition under which the water absorbent resin composition according to the present invention is used in an absorbent core of a sanitary material such as a diaper, it is preferable to select a water absorbent resin composition, not being colored, which is harmless for a human body.

In order to efficiently keep an effect of the water-soluble multivalent metal salt for an extended period of time upon absorption, it is preferable to select a water-soluble multivalent metal salt which is soluble in normal temperature pure water when its concentration is 5 mass % or more. It is more preferable to select a water-soluble multivalent metal salt which is soluble in normal temperature pure water when its concentration is 10 mass % or more. It is still more preferable to select a water-soluble multivalent metal salt which is soluble in normal temperature pure water when its concentration is 20 mass % or more.

Examples of the water-soluble multivalent metal salt which can be used in the present invention include: aluminum chloride, aluminum polychloride, aluminum sulfate, aluminum nitrate, aluminum potassium bis sulfate, sodium aluminum bis sulfate, potassium alum, ammonium alum, sodium alum, sodium aluminate, calcium chloride, calcium nitrate, magnesium chloride, magnesium sulfate, magnesium nitrate, zinc chloride, zinc sulfate, zinc nitrate, iron chloride (III), cerium chloride (III), ruthenium chloride (III), yttrium chloride (III), and chromium chloride (III). Further, it is preferable to use a salt having the crystal water in terms of solubility with respect to absorbed liquid such as urine. It is particularly preferable to use aluminum compounds. Among aluminum compounds, it is preferable to use aluminum chloride, aluminum polychloride, aluminum sulfate, aluminum nitrate, potassium aluminum bis sulfate, sodium aluminum bis sulfate, potassium alum, ammonium alum, sodium alum, and sodium aluminate. It is particularly preferable to use aluminum sulfate, and it is most preferable to use hydrous crystal powder such as sodium aluminum octadeca hydrate and sodium aluminum dodeca to octadeca hydrate. These components may be independently or in a suitable combination of two

or more kinds.

Further, examples of the tetravalent water-soluble metal salt which can be used include zirconium oxychloride octahydrate, zirconium ammonium carbonate, zirconium potassium carbonate, zirconium sodium carbonate, zirconium sulfate hydrate, zirconium diacetate, zirconium nitrate, hydroxy zirconium chloride, titanium triethanolaminate, titanium lactate, and the like. Further, it is preferable to use a salt having the crystal water also in terms of solubility with respect to absorbed liquid such as urine. It is more preferable to use zirconium oxychloride octahydrate and zirconium sulfate hydrate. These components may be used independently or in a suitable combination of two or more kinds.

It is preferable that the water-soluble multivalent metal salt which can be used in the present invention is particulate. In terms of a mixing property, it is preferable that a particle diameter thereof is smaller than a particle diameter of the water absorbent resin particles. Its mass average particle diameter is preferably 500 μm or less, more preferably 400 μm or less. In terms of a performance, it is more preferable that 20 mass % or more of particles whose particle diameter is 150 μm or less is contained with respect to the whole water-soluble multivalent metal salt. It is most preferable that 30 mass % or more of particles whose particle diameter is 150 μm or less is contained with respect to the whole water-soluble multivalent metal salt.

In the water absorbent resin composition according to the present invention, a total amount of the nitrogenous ketone compound (A) and the water-soluble multivalent metal salt ranges from 0.01 to 100 parts by mass, preferably from 0.05 to 50 parts by mass, more preferably from 0.1 to 10 parts by mass, particularly preferably from 0.5 to 5 parts by mass, with respect to 100 parts by mass of the water absorbent resin particles. When the total amount of the nitrogenous ketone compound (A) and the water-soluble multivalent metal salt is less than 0.01 part by mass, it may be impossible to sufficiently improve the liquid permeability and liquid diffusion property and the blocking ratio. When the total amount of the nitrogenous ketone compound (A) and the water-soluble multivalent metal salt exceeds 100 parts by mass, absorbing properties such as CRC and AAP may significantly drop.

In the water absorbent resin composition according to the present invention, a mass ratio of the nitrogenous ketone compound (A) contained and the water-soluble multivalent metal salt contained preferably ranges from 1 : 10 to 10 : 1, more preferably from 3 : 7 to 7 : 3. When the mass ratio deviates from the range of from 1 : 10 to 10 : 1, it may be impossible to sufficiently improve the liquid permeability and liquid diffusion property and the blocking ratio, or absorbing properties such as CRC and AAP may significantly drop.

In the water absorbent resin composition according to the present invention, in order to sufficiently exhibit effects of the present invention, it is preferable that at least a part of surfaces of the water absorbent resin particles is coated with the nitrogenous ketone compound (A) and the water-soluble multivalent metal salt. Further, it is more preferable not to coat entire surfaces of the water absorbent resin particles. When the entire surfaces of the water absorbent resin particles are coated, an absorption rate (for example, a centrifuge retention capacity (CRC) and an absorbency against pressure of 4.83 kPa (AAP)) may significantly drop.

It is preferable that the water absorbent resin composition according to the present invention has a mass average particle diameter ranging from 100 to 600 μm, more preferably from 200 to 500 μm. When the mass average particle diameter deviates from the range of from 100 to 600 μm, the liquid permeability and liquid diffusion property may drop and the absorption rate may significantly drop which results in liquid leakage in case where the water absorbent resin composition is used in a diaper for example.

The water absorbent resin composition according to the present invention contains preferably 90 mass % or more of particles whose particle diameter ranging from 150 to 850 μm, more preferably 90 mass % or more of particles whose particle diameter ranging from 150 to 600 μm, with respect to an entire amount thereof.

A particle size distribution logarithmic standard deviation ($\sigma\zeta$) of the water absorbent resin composition according to the present invention preferably ranges from 0.25 to 0.45, more preferably from 0.27 to 0.43, most preferably from 0.30 to 0.40 mm/s. The particle size distribution logarithmic standard deviation ($\sigma\zeta$) is a value indicative of uniformity of the particle size distribution. As the particle size distribution logarithmic standard deviation ($\sigma\zeta$) is lower, the particle size distribution is narrower. When the particle size distribution logarithmic standard deviation ($\sigma\zeta$) is less than 0.25, the particle size distribution is so narrow that a relationship between the liquid diffusion/liquid permeation property and a capillary force may be off balance. When the particle size distribution logarithmic standard deviation ($\sigma\zeta$) exceeds 0.45, it may be difficult to treat the water absorbent resin composition and a relationship between the liquid diffusion/liquid permeation property and a capillary force may be off balance.

The water absorbent resin composition according to the present invention has a centrifuge retention capacity (CRC) of 5 (g/g) or more, more preferably 10 (g/g) or more, still more preferably 15 (g/g) or more, still further more preferably 20 (g/g) or more, most preferably 25 (g/g) or more. An upper limit of the centrifuge retention capacity (CRC) is not particularly limited, but is preferably 50 (g/g) or less, more preferably 40 (g/g) or less, still more preferably 35 (g/g) or less. When the centrifuge retention capacity (CRC) is less than 5 (g/g), an amount of absorbed liquid is so small that the water absorbing agent is not suitable for use in a sanitary material such as a diaper. Further, when the centrifuge retention capacity (CRC) exceeds 50 (g/g), its gel strength is low, so that it may be impossible to obtain a water absorbent resin composition which is superior in liquid permeability.

An absorbency against pressure (AAP) of the water absorbent resin composition according to the present invention is preferably 10 (g/g) or more, more preferably 15 (g/g) or more, still more preferably 20 (g/g) or more, where the pressure is 4.83 kPa. In case where the absorbency against pressure of 4.83 kPa (AAP) is less than 10 (g/g), when the water absorbent resin composition is used in a diaper for example, a so-called re-wet amount (an amount of returning liquid which had been absorbed) is large which results in skin rash of a baby.

A saline flow conductivity (SFC) of the water absorbent resin composition according to the present invention is preferably 30($\times 10^{-7}cm^3 \cdot s \cdot g^{-1}$) or more, more preferably 70($\times 10^{-7}cm^3 \cdot s \cdot g^{-1}$) or more, still more preferably 100 ($\times 10^{-7}cm^3 \cdot s \cdot g^{-1}$) or more, particularly preferably 130($\times 10^{-7}cm^3 \cdot s \cdot g^{-1}$) or more. In case where the saline flow conductivity (SFC) is less than 30($\times 10^{-7}cm^3 \cdot s \cdot g^{-1}$) or more, when concentration of the water absorbent resin particles in a core of a diaper is 30 mass % or more (more specifically, when concentration of the water absorbent resin particles in a core of a diaper is 50 mass % or more), a rate at which urine is absorbed is low. This may result in leakage.

An amount of water-soluble components of the water absorbent resin composition according to the present invention is preferably 35 mass % or less, more preferably 25 mass % or less, still more preferably 15 mass % or less. In case where the amount of the water-soluble components exceeds 35 mass %, its gel strength is low which drops liquid permeability. Further, when the water absorbent resin composition is used in a diaper, absorption capacities (CRC and AAP) may drop as time elapses.

The water absorbent resin composition according to the present invention so effectively suppresses occurrence of dusts. An amount of dusts is preferably 1.00 $mg/m^3$ or less, more preferably 0.30 $mg/m^3$ or less.

The water absorbent resin composition according to the present invention is superior in a blocking ratio (BR). The blocking ratio (BR) is preferably 35 % or less, more preferably 10 % or less.

The water absorbent resin composition according to the present invention is superior preferably in a liquid diffusion velocity (LDV). The LDV is a parameter indicative of "a condition under which liquid is absorbed in a diffusive manner". In performances of an absorbing article such as a disposable diaper and a sanitary napkin or an absorbent core, the LDV relates to a rate at which liquid disperses in the absorbent core, particularly relates to a rate at which initial liquid is absorbed. That is, the water absorbent resin composition which is superior in the LDV can remarkably improve the liquid diffusing property in practical use of a diaper or the like. In the water absorbent resin composition according to the present invention, a lower limit of LDV is preferably 2.1 mm/s or more, more preferably 2.3 mm/s or more, most preferably 2.5 mm/s or more. Further, in the water absorbent resin composition according to the present invention, an upper limit of LDV is not particularly limited. However, the upper limit of LDV is preferably 10 mm/s or less, more preferably 5 mm/s or less. As to a value range of LDV of the water absorbent resin composition according to the present invention, the upper limit and the lower limit can be appropriately combined with each other. A more specific value range is as follows. The water absorbent resin composition according to the present invention has the liquid diffusion velocity (LDV) preferably ranging from 2.1 to 10 mm/s, more preferably from 2.3 to 10 mm/s, most preferably from 2.5 to 10 mm/s.

A moisture content of the water absorbent resin composition according to the present invention is preferably 0.1 mass % or more and less than 10 mass %, particularly preferably less than 5 mass %.

[Production Method of Water Absorbent Resin Composition]

There is no particular limitation in a method for producing a water absorbent resin composition which includes: water absorbent resin particles having an internal cross-linked structure obtained by polymerizing a water-soluble unsaturated monomer; a nitrogenous ketone compound (A); and a water-soluble multivalent metal salt. However, the following methods 1 to 4 are preferable.

(Production Method 1)

A first production method (production method 1) of the water absorbent resin composition according to the present invention is such that: powder of the nitrogenous ketone compound (A) and powder of the water-soluble multivalent metal salt are mixed with the water absorbent resin particles having an internal cross-linked structure obtained by polymerizing a water-soluble unsaturated monomer (hereinafter, this operation is referred to as fusion bonding).

In fusion bonding the nitrogenous ketone compound (A) and the bivalent, trivalent, and tetravalent water-soluble multivalent metal salt to the water absorbent resin particles, the nitrogenous ketone compound (A) and the bivalent, trivalent, and tetravalent water-soluble multivalent metal salt may be simultaneously fusion bonded, or the nitrogenous ketone compound (A) and the bivalent, trivalent, and tetravalent water-soluble multivalent metal salt may be separately fusion bonded.

It is preferable that a total amount of the nitrogenous ketone compound (A) and the bivalent, trivalent, and tetravalent water-soluble multivalent metal salt ranges from 0.01 to 100 parts by mass, more preferably from 0.05 to 50 parts by mass, still more preferably from 0.1 to 10 parts by mass, particularly preferably from 0.5 to 5 parts by mass, with respect to 100 parts by mass of the water absorbent resin particles. When the total amount of the nitrogenous

ketone compound (A) and the bivalent, trivalent, and tetravalent water-soluble multivalent metal salt is less than 0.01 part by mass, it may be impossible to sufficiently improve the liquid permeability and liquid diffusion property and the blocking ratio. When the total amount of the nitrogenous ketone compound (A) and the bivalent, trivalent, and tetravalent water-soluble multivalent metal salt exceeds 100 parts by mass, the absorbing properties such as CRC and AAP may significantly drop.

A mass ratio of the nitrogenous ketone compound (A) used and the bivalent, trivalent, and tetravalent water-soluble multivalent metal salt used preferably ranges from 1 : 10 to 10 : 1, more preferably from 3 : 7 to 7 : 3. When the mass ratio of the nitrogenous ketone compound (A) used and the bivalent, trivalent, and tetravalent water-soluble multivalent metal salt used deviates from the range of from 1 : 10 to 10 : 1, it may be impossible to sufficiently improve the liquid permeability and liquid diffusion property and the blocking ratio, or absorbing properties such as CRC and AAP may significantly drop.

The fusion bond in the present invention is a method in which: at least a part of the nitrogenous ketone compound (A) and the water-soluble multivalent metal salt comes into contact with the water absorbent resin particles, so that they becomes in a fused phase or becomes softer than in a solid phase, thereby bonding them to surfaces of the water absorbent resin particles. Note that, as described above, they may be heated at the time of the mixing operation. The heating operation promotes the fusion bond.

That is, as long as any one of the foregoing methods is adopted, the mixing operation is not particularly limited. However, examples of the mixing operation include the following methods (a) to (d).

(a) Water absorbent resin particles (heated if necessary) whose fusing point is higher than fusing points of the nitrogenous ketone compound (A) and the water-soluble multivalent metal salt is mixed with the nitrogenous ketone compound (A) and the water-soluble multivalent metal salt.

(b) There are mixed (i) a nitrogenous ketone compound (A) (heated if necessary) whose fusing point is higher than a fusing point of the foregoing nitrogenous ketone compound (A), (ii) a water-soluble multivalent metal salt (heated if necessary) whose fusing point is higher than a fusing point of the foregoing water-soluble multivalent metal salt, and (iii) the water absorbent resin particles.

(c) After mixing water absorbent resin particles, a nitrogenous ketone compound (A), and a water-soluble multivalent metal salt, thus obtained mixture is heated so that its temperature exceeds fusing points of the nitrogenous ketone compound (A) and the water-soluble multivalent metal salt.

(d) There are mixed (i) water absorbent resin particles (heated if necessary) whose fusing point is higher than fusing points of nitrogenous ketone compound (A) and water-soluble multivalent metal salt, (ii) a nitrogenous ketone compound (A) (heated if necessary) whose fusing point is higher than a fusing point of the foregoing nitrogenous ketone compound (A), and (iii) a water-soluble multivalent metal salt (heated if necessary) (heated if necessary) whose fusing point is higher than a fusing point of the foregoing water-soluble multivalent metal salt.

These methods are preferable, but it is possible to adopt other method.

Examples of heating means include a heater, a microwave, a supersonic wave, an infrared ray, and the like.

In the heating operation, it is preferable to heat the component so that its temperature exceeds fusing points of the nitrogenous ketone compound (A) and the water-soluble multivalent metal salt. A temperature at which the heating operation is performed preferably ranges from 100 to 200°C, more preferably from 120 to 180°C, most preferably from 130 to 150°C.

In case where the fusion bond can be performed merely by mixing the water absorbent resin particles, the nitrogenous ketone compound (A), and water-soluble multivalent metal salt, it is not necessary to perform the heating operation.

An adding/mixing method is not particularly limited, and a known adding/mixing method may be adopted. It is preferable to adopt a method of simultaneously or separately or sequentially adding a predetermined amount of nitrogenous ketone compound (A) and a known amount of water-soluble multivalent metal salt to water absorbent resin particles.

It is preferable to perform the adding/mixing operation while stirring the components. Further, it is preferable to fusion bond at least a part of a nitrogenous ketone compound (A) and a water-soluble multivalent metal salt to water absorbent resin particles while stirring these components.

As a stirrer, it is possible to use a paddle blender, a ribbon mixer, a rotary blender, a jar tumbler, a blunger-mixer, a mortar mixer, and the like. Each of these stirrers may be arranged so as to heat a mixture and may be arranged so as to cool a heated mixture.

A time taken to stir the mixture is not particularly limited, but is preferably 60 minutes or less, more preferably 30 minutes or less.

In case of heating and fusion bond a mixture (thermal fusion bond), it is preferable to press the mixture of the water absorbent resin particles, the nitrogenous ketone compound (A), and the water-soluble multivalent metal salt. The pressure promotes the fusion bond.

(Production Method 2)

A second production method (production method 2) of the water absorbent resin composition according to the present invention is such that: a liquid product containing a nitrogenous ketone compound (A) and a water-soluble multivalent metal salt is added to water absorbent resin particles having an internal cross-linked structure obtained by polymerizing a water-soluble unsaturated monomer.
A ratio of (i) a using amount of the nitrogenous ketone compound (A) and (ii) a using amount of the water-soluble multivalent metal salt is the same as in the production method 1.
As the liquid product containing the nitrogenous ketone compound (A) and the water-soluble multivalent metal salt, for example, it is possible to use a liquid product containing only the nitrogenous ketone compound (A) and the water-soluble multivalent metal salt, or it is possible to use a liquid product further containing liquid such as water, polyhydric alcohol (preferably, the aforementioned polyhydric alcohol), and the like. Particularly, when the nitrogenous ketone compound (A) (preferably, urea (in a solid phase at normal temperature)) and aluminum sulfate hydrate (in a solid phase at normal temperature) are mixed and when the nitrogenous ketone compound (A) (preferably, urea (in a solid phase at normal temperature)) and zirconium oxychloride octahydrate are mixed, a liquid product is formed. The inventors of the present invention found this condition, thereby completing the present invention.
A ratio of the nitrogenous ketone compound (A) (preferably, urea) contained in the liquid product containing the nitrogenous ketone compound (A) (preferably, urea) and the water-soluble multivalent metal salt preferably ranges from 10 to 80 mass %, more preferably from 20 to 70 mass %, still more preferably from 30 to 60 mass %.
When the liquid product has high viscosity, solvent or the like may be used. As the solvent, organic solvent, an alcohol, water, and the like are favorably used, but it is particularly preferable to use water. A ratio of solvent contained in the liquid product preferably ranges from 0 to 80 mass %, more preferably from 10 to 60 mass %, still more preferably from 20 to 40 mass %.
As to a using amount of the liquid containing the nitrogenous ketone compound (A) (preferably, urea) and the water-soluble multivalent metal salt, an amount of the liquid product containing the nitrogenous ketone compound (A) (preferably, urea) and the water-soluble multivalent metal salt preferably ranges from 0.01 to 100 parts by mass, more preferably from 0.1 to 50 parts by mass, still more preferably from 1.0 to 10 parts by mass, with respect to 100 parts by mass of the water absorbent resin particles.
An adding/mixing method is the same as in the production method 1.

(Production Method 3)

A third production method (production method 3) of the water absorbent resin composition according to the present invention is such that: an aqueous solution containing a nitrogenous ketone compound (A), an aqueous solution containing a water-soluble multivalent metal salt, and water absorbent resin particles having an internal cross-linked structure obtained by polymerizing a water-soluble unsaturated monomer are mixed with each other.
A ratio of (i) a using amount of the nitrogenous ketone compound (A) and (ii) a using amount of the water-soluble multivalent metal salt is the same as in the production method 1.
A concentration of the nitrogenous ketone compound (A) in the aqueous solution containing the nitrogenous ketone compound (A) is preferably 50 % or more, more preferably 60 % or more, still more preferably 70 % or more, further still more preferably 80 % or more, particularly preferably 90 % or more, with respect to a saturated concentration, in order to prevent permeation and diffusion in the water absorbent resin particles. Of course, the concentration may be the saturated concentration.
A concentration of the water-soluble multivalent metal salt in the aqueous solution containing the water-soluble multivalent metal salt is preferably 50 % or more, more preferably 60 % or more, still more preferably 70 % or more, further still more preferably 80 % or more, particularly preferably 90 % or more, with respect to a saturated concentration, in order to prevent permeation and diffusion in the water absorbent resin particles. Of course, the concentration may be the saturated concentration.
The aqueous solution containing the nitrogenous ketone compound (A) may contain aqueous liquid such as polyhydric alcohol (preferably, the aforementioned polyhydric alcohol).
The aqueous solution containing the water-soluble multivalent metal salt may contain, for example, aqueous liquid such as polyhydric alcohol (preferably, the aforementioned polyhydric alcohol). The aqueous liquid such as the polyhydric alcohol (preferably, the aforementioned polyhydric alcohol) may act as a mixing coadjuvant or may act as a surface cross-linking agent.
An amount of the aqueous solution containing the nitrogenous ketone compound (A) preferably ranges from 0.01 to 100 parts by mass, more preferably from 0.1 to 50 parts by mass, still more preferably from 1.0 to 10 parts by mass, with respect to 100 parts by mass of the water absorbent resin particles.
An amount of the aqueous solution containing the water-soluble multivalent metal salt preferably ranges from

0.01 to 100 parts by mass, more preferably from 0.1 to 50 parts by mass, still more preferably from 1.0 to 10 parts by mass, with respect to 100 parts by mass of the water absorbent resin particles.

An order in which the aqueous solution containing the nitrogenous ketone compound (A) and the aqueous solution containing the water-soluble multivalent metal salt are added is not particularly limited, and they may be simultaneously added, or one of them may be precedently added. It is preferable to add the aqueous solution containing the nitrogenous ketone compound (A) after adding the aqueous solution containing the water-soluble multivalent metal salt. In this case, it is preferable that the water absorbent resin particles are subjected to the surface treatment (preferably, the surface cross-linking treatment) by adding the aqueous solution containing the water-soluble multivalent metal salt. Further, the surface treatment (preferably, the surface cross-linking treatment) is performed preferably at temperature ranging from 150 to 250°C.

An adding/mixing method is the same as in the production method 1.

(Production Method 4)

A fourth production method (production method 4) of the water absorbent resin composition according to the present invention is such that: one of a nitrogenous ketone compound (A) and a water-soluble multivalent metal salt is mixed as an aqueous solution with water absorbent resin particles having an internal cross-linked structure obtained by polymerizing a water-soluble unsaturated monomer, and the other of the nitrogenous ketone compound (A) and the water-soluble multivalent metal salt is dry blended with the water absorbent resin particles.

A ratio of (i) a using amount of the nitrogenous ketone compound (A) and (ii) a using mount of the water-soluble multivalent metal salt is the same as in the production method 1.

A concentration of the nitrogenous ketone compound (A) in the aqueous solution containing the nitrogenous ketone compound (A) is preferably 50 % or more, more preferably 60 % or more, still more preferably 70 % or more, further still more preferably 80 % or more, particularly preferably 90 % or more, with respect to a saturated concentration, in order to prevent permeation and diffusion in the water absorbent resin particles. Of course, the concentration may be the saturated concentration.

A concentration of the water-soluble multivalent metal salt in the aqueous solution containing the water-soluble multivalent metal salt is preferably 50 % or more, more preferably 60 % or more, still more preferably 70 % or more, further still more preferably 80 % or more, particularly preferably 90 % or more, with respect to a saturated concentration, in order to prevent permeation and diffusion in the water absorbent resin particles. Of course, the concentration may be the saturated concentration.

In case of using the aqueous solution containing the nitrogenous ketone compound (A), the aqueous solution containing the nitrogenous ketone compound (A) may contain aqueous liquid such as polyhydric alcohol (preferably, the aforementioned polyhydric alcohol).

In case of using the aqueous solution containing the water-soluble multivalent metal salt, the aqueous solution containing the water-soluble multivalent metal salt may contain aqueous liquid such as polyhydric alcohol (preferably, the aforementioned polyhydric alcohol).

In case where either a nitrogenous ketone compound (A) or water-soluble multivalent metal salt is mixed, as aqueous solution, with water absorbent resin particles having an internal cross-linking structure obtained by polymerizing a water-soluble unsaturated monomer and the other one is dry blended therewith, the mixing operation and the dry blending operation are simultaneously performed or either the mixing operation or the dry blending operation may be precedently performed.

An adding/mixing method is the same as in the production method 1.

[Absorbent Core)

The water absorbent resin composition obtained in the present invention is combined with a suitable material, thereby obtaining favorable absorbent core serving as an absorbing layer of a sanitary material for example. The following describes the absorbent core.

The absorbent core is a composition, used in sanitary materials such as a disposable diaper, a sanitary napkin, an incontinence pad, a medical pad, to absorb blood, body fluid, and urine. The composition contains the water absorbent resin composition and other materials. An example of the material used is a cellulose fiber. Specific examples of the cellulose fiber include: wood pulp fibers such as a mechanical pulp, a chemical pulp, a semi-chemical pulp, a dissolved pulp, and the like, that are extracted from wood; artificial cellulose fibers such as rayon and acetate; and the like. Among the cellulose fibers, it is preferable to use the wood pulp fiber. Each of these cellulose fibers may partially contain a synthesis fiber such as polyester. In case of using the water absorbent resin composition obtained in the present invention as a part of the absorbent core, a mass of the water absorbent resin composition obtained in the present invention is preferably 20 mass % or more, more preferably 30 mass % or more, still preferably 40 mass % or more. When the mass

of the water absorbent resin composition obtained in the present invention is less than 20 mass %, it may be impossible to obtain a sufficient effect.

In order to obtain the absorbent core by using the water absorbent resin composition obtained in the present invention and the cellulose fiber, an appropriate method is selected, for example, from the following known methods: a method in which the water absorbent resin composition is dispersed on paper or a mat made from cellulose fiber and the dispersed water absorbent resin composition is held by the paper or mat as required; a method in which the cellulose fiber and the water absorbent resin composition are evenly blended with each other; and a similar method. It is preferable to adopt a method in which the water absorbent resin composition and the cellulose fiber are dry mixed with each other and then are compressed. According to this method, it is possible to remarkably suppress the water absorbent resin composition from falling away from the cellulose fiber. It is preferable to perform the compression while heating, and a temperature range at this time is 50 to 200°C. Further, in order to obtain the absorbent core, a method recited in Published Japanese Translations of International Publication of Patent Application No. 509591/1997 (Tokuhyouhei 9-509591) and a method recited in Japanese Unexamined Patent Publication Tokukaihei 9-290000 are favorably adopted.

The water absorbent resin composition obtained in the present invention is superior in properties. Thus, when the water absorbent resin composition is used in the absorbent core, it is possible to obtain an extremely superior absorbent core which quickly absorbs liquid and has little liquid remaining on a surface layer thereof.

The water absorbent resin composition obtained in the present invention has a superior water absorbing property. Thus, the water absorbent resin composition can be used as a water absorbing/retaining agent in various use. For example, it is possible to use the water absorbent resin composition in: absorbing article water absorbing/retaining agents such as a disposable diaper, a sanitary napkin, an incontinence pad, and a medical pad; agriculture/horticulture water retaining agents such as an alternative bog moss, a soil reforming/improving agent, a water retaining agent, and an agrichemical effect maintaining agent; architectural water retaining agents such as an interior wall condensation preventing agent, and a cement additive; a release control agent; a cold insulation agent; a disposable body warmer; a sewage coagulator; a food freshness maintaining agent; an ion exchange column material; a sludge or oil dehydrating agent; a desiccating agent; a humidity controlling agent; and the like. Further, the water absorbent resin composition obtained in the present invention is favorably used in an absorbing sanitary material, such as a disposable diaper and a sanitary napkin, which absorbs feces, urine, and blood.

In case where the absorbent core is used in sanitary materials such as a disposable diaper, a sanitary napkin, an incontinence pad, a medical pad, it is preferable to arrange the absorbent core so as to include: (a) a liquid permeable top sheet disposed adjacent to a body of the user, (b) a liquid impermeable back sheet disposed adjacent to a clothe of the user so as to be away from the body of the user, and (c) an absorbent core disposed between the top sheet and the back sheet. The absorbent core may be arranged so as to be two-or-more-layered, or may be used with a pulp layer.

[Examples]

The following description specifically explains the present invention, but the present invention is not limited to this. Note that, for convenience in description, "part by mass" is referred to merely as "part", and "litter" is referred to merely as "L". Also, "mass %" is referred to merely as "wt %".

Properties of the water absorbent resin particles or the water absorbent resin composition were measured in accordance with the following method. Further, when a specific condition is not described, this means that all the operations were performed at room temperature (20 to 25°C) and at humidity of 50 RH%.

Note that, in case of the water absorbent resin composition used as a final product such as a sanitary material, the water absorbent resin composition absorbed moisture, so that the water absorbent resin composition was separated from the final product as required and properties thereof were measured after being subjected to reduced-pressure low-temperature drying (for example, at 1 mmHg or less and at 60°C for 12 hours). Further, a moisture content of each of the water absorbent resin compositions used in Examples and Comparative Examples of the present invention was 6 mass % or less.

< Centrifuge Retention Capacity (CRC)>

The centrifuge retention capacity (CRC) represents an absorption capacity at which 0.90 mass % of saline is absorbed for 30 minutes without any pressure. Note that, the CRC is sometimes referred to as an absorbency without load.

0.200 g of water absorbent resin particles or a water absorbent resin composition was evenly contained in a bag (85 mm × 60 mm) made of a nonwoven fabric (Heatron Paper made by Nangoku Pulp Kogyo Co., Ltd.: model type is GSP-22). Then, the bag was heat-sealed. Thereafter, the bag was soaked in an excessively large amount (generally, about 500 ml) of 0.90 mass % physiological saline (sodium chloride aqueous solution) whose temperature had been adjusted to room temperature, and was withdrawn 30 minutes later. By using a centrifugal separator (centrifugal machine made by KOKUSAN Corporation: model type is H-122), the bag was drained for three minutes at a centrifugal force

(250G) recited in edana ABSORBENCY II 441,1-99, and a mass W1 (g) of the bag was measured. Further, the same operation was performed without using the water absorbent resin particles or the water absorbent resin composition, and a mass W0 (g) was measured. Then, from the masses 1 and W0, a centrifuge retention capacity (CRC) (g/g) was calculated according to the following equation.

Centrifuge retention capacity (g/g) = ((mass W1 (g) - mass W0 (g))/ mass (g) of water absorbent resin particles or water absorbent resin composition) - 1

< Absorbency Against Pressure (AAP)>

The absorbency against pressure (AAP) represents an absorbency at which 0.90 mass % of saline is absorbed for 60 minutes at 4.83 kPa. Note that, the AAP is referred to also as an absorbency against pressure of 4.83 kPa.

By using an apparatus shown in Fig. 1, the absorbency against pressure (AAP) was measured. On a bottom of a plastic supporting cylinder 100 having a 60 mm internal diameter, a metal gauze 101 of stainless-steel 400 mesh (mesh size of 38 μm) was fusion-bonded. Then, under a condition of a room temperature (20°C to 25°C) and 50 RH% relative humidity, 0.900 g of water absorbent resin particles or a water absorbent resin composition was evenly spread on the mesh. Subsequently, a piston 103 and a load 104 were placed in this order on the water absorbent resin particles or the water absorbent resin composition. External diameters of the piston 103 and the load 104 were slightly smaller than 60 mm which was the internal diameter of the supporting cylinder 100, so that there is no gap between the piston and the supporting cylinder, and upward and downward movements of the piston 103 and the load 104 would not be hampered. Note that, the piston 103 and the load 104 were so adjusted as to evenly apply a 4.83 kPa (0.7 psi) load onto the water absorbent resin particles or the water absorbent resin composition. Then, a mass Wa (g) of this measurement set was measured.

Inside a petri dish 105 having a 150 mm diameter, a glass filter 106 (product of Sougo Rikagaku Glass Seisakusho Co., Ltd.; diameter of fine pores: 100 μm to 120 μm) having a 90 mm diameter was placed. Thereafter, a 0.90 mass % of sodium chloride solution 108 whose temperature had been adjusted to 20°C to 25°C was added until it reached a level of an upper surface of the glass filter 106. Then, a piece of filter paper (product of Advantec Toyo Kaisha, Ltd.; product name: JIS P3801, No. 2; thickness: 0.26 mm; diameter of retained particles: 5 μm) having a 90 mm diameter was placed thereon, so that an entire surface of the filter paper 107 was wetted. An excess of the 0.90 mass % saline 108 was removed.

The measuring apparatus set was placed on the wet filter paper 107. Then, the water absorbent resin particles or the water absorbent resin composition was made to absorb the 0.90 mass % saline 108 for one hour under the load of 4.83 kPa (0.7 psi). One hour later, the measuring apparatus set having absorbed the 0.90 mass % saline 108 was lifted, and a mass Wb (g) thereof was measured. From the masses Wa and Wb, the absorbency against pressure (AAP) (g/g) was calculated according to the following equation.

Absorbency against pressure (AAP) = (Wb (g) - Wa (g))/ mass (0.900) g of water absorbent resin particles or water absorbent resin composition)

<Saline Flow Conductivity (SFC)>

The saline flow conductivity is a value indicative of liquid permeability when water absorbent resin particles or a water absorbent resin composition is swollen. The higher the SFC is, the higher the liquid permeability is.

Calculation of the saline flow conductivity was performed in accordance with a saline flow conductivity (SFC) test recited in Published Japanese Translations of International Publication of Patent Application No. 509591/1997 (Tokuhyohei 9-509591).

By using an apparatus shown in Fig. 2, the water absorbent resin particles or the water absorbent resin composition (0.900 g) evenly spread in a container 40 was swollen in a synthesized urine (1) under a pressure of 0.3 psi (2.07 kPa) for 60 minutes, and a height of a gel layer of a gel 44 was recorded. Then, under a pressure of 0.3 psi (2.07 kPa), 0.69 mass % sodium chloride solution 33 was made to flow from a tank 31 and to pass through the swollen gel layer at a constant hydrostatic pressure. The SFC test was performed at room temperature (20 to 25°C). By using a computer and a scale, an amount of liquid passing through the gel layer at intervals of 20 seconds was recorded for 10 minutes as a time function. A flow rate Fs(t) of the solution passing through the swollen gel 44 (mainly between particles thereof) was determined in terms of g/s by dividing an increasing weight (g) by an increasing time (s). A time in which a constant hydrostatic pressure and a stable flow rate had been obtained was set as "Ts", and only data obtained between "Ts" and a ten-minute interval was used to calculate the flow rate, the flow rate calculated between "Ts" and a ten-minute interval was used to calculate a value of Fs (t=0), i.e., a first flow rate of the solution passing through the gel layer. Fs (T=O) was calculated by extrapolating T=0 from a result obtained by approximating a function indicative of a relationship between Fs (T) and T.

$$\text{Saline flow conductivity (SFC)} = (Fs\ (t=0) \times L0)/(\rho \times A \times \Delta P) = (Fs\ (t=0) \times L0)/139506$$

Here,
Fs (t=0): a flow rate represented by "g/s"
L0: a height of the gel layer that is represented by "cm"
ρ: a density (1.003 g/$cm^3$) of NaCl solution
A: an area (28.27 $cm^2$) on the upper side of the gel layer of the cell 41
ΔP: a hydrostatic pressure (4920 dyne/$cm^2$) exerted to the gel layer. Further, a unit of the saline flow conductivity (SFC) is ($10^{-7} \times cm^3 \times s \times g^{-1}$).

In the apparatus shown in Fig. 2, a glass tube 32 was inserted into the tank 31, and a lower end of the glass tube 32 was disposed so that 0.69 mass % sodium chloride solution 33 was positioned 5 cm higher than a bottom of the swelling gel 44 in the cell 41. 0.69 mass % sodium chloride solution 33 contained in the tank 31 was supplied to the cell 41 via an L-shaped tube 34 with a cock. A collecting container 48 for collecting liquid having passed through the gel layer was disposed under the cell 41, and the collecting container 48 was placed on an even balance 49. An inside diameter of the cell 41 was 6 cm, and No. 400 stainless metal gauze (38 μm in mesh) 42 was placed on a bottom of a lower portion of the cell 41. A hole 47 which allowed liquid to pass through was provided on a lower portion of a piston 46, and a glass filter 45 having high permeability was provided on the bottom thereof so that (i) the water absorbent resin particles or the water absorbent resin composition or (ii) the swelling gel did not enter into the hole 47. The cell 41 was placed on a table for the cell, and the table's surface which is in contact with the cell was positioned on the stainless metal gauze 43 which did not prevent the liquid from passing through.

The synthesized urine (1) was prepared by mixing 0.25 g of calcium chloride dihydrate, 2.0 g of potassium chloride, 0.50 g of magnesium chloride hexahydrate, 2.0 g of sodium sulfate, 0.85 g of ammonium dihydrogen phosphate, 0.15 g of ammonium dihydrogen phosphate, and 994.25 g of pure water.

<Mass average particle diameter (D50) And Logarithmic Standard Deviation (σζ) of Particle Size Distribution>

The water absorbent resin particles or the water absorbent resin composition was sieved by using JIS standard sieves respectively having mesh sizes of 850 μm, 710 μm, 600 μm, 500 μm, 425 μm, 300 μm, 212 μm, 150 μm, 45 μm, and the like, and a residual percentage R was plotted on a logarithmic probability paper. Then, a particle diameter corresponding to R=50 mass % was read as the mass average particle diameter (D50). Further, assuming that X1 is a particle diameter in case where R=84.1 % and X2 is a particle diameter in case where R=15.9, the logarithmic standard deviation (σζ) is represented by the following equation. As a value of σζ is smaller, the particle size distribution is narrower.

$$\sigma\zeta = 0.5 \times \ln (X2/X1)$$

Classification in measuring the logarithmic standard deviation (σζ) of the particle size distribution was performed as follows: 10.0 g of the water absorbent resin particles or the water absorbent resin composition was spread on JIS standard sieves (THE IIDA TESTING SIEVE: diameter is 8cm) respectively having mesh size, of 850 μm, 710 μm, 600 μm, 500 μm, 425 μm, 300 μm, 212 μm, 150 μm, and 45 μm, and was classified by using a sieve shaker (IIDA SIEVE SHAKER, TYPE: ES-65 (rotational frequency: 60 Hz 230 rpm, impact: 60 Hz 130 rpm), SER. No. 0501) for five minutes at the room temperature (20°C to 25°C) under the humidity of 50 RH%.

<Blocking Ratio (BR)>

The blocking ratio is a value obtained at 25°C, at 70 RH%, in an hour.

2.00 g of water absorbent resin particles or a water absorbent resin composition was evenly spread on a bottom of a predetermined cup whose inside diameter was 50 mm and height was 10 mm, and was quickly placed in a constant-temperature-and-moisture apparatus (PLATINOUS LUCIFFER PL-2G, product of TABAI ESPEC CORPORATION) in which temperature had been adjusted to 25°C and relative humidity had been adjusted to 70 %. Then, the water absorbent resin particles or the water absorbent resin composition was left in the constant-temperature-and-moisture apparatus

for 60 minutes. Thereafter, the water absorbent resin particles or the water absorbent resin composition that had absorbed moisture was moved onto a JIS standard sieve (diameter is 7.5 cm, mesh size is 2000 μm), and was sieved for five minutes by using a sieve shaker (IIDA SIEVE SHAKER, TYPE: ES-65 (rotational frequency: 60 Hz 230 rpm, impact: 60 Hz 130 rpm), SER. No. 0501). Then, a mass W4 (g) of the water absorbent resin particles or the water absorbent resin composition which remained on the sieve and a mass W5 (g) of the water absorbent resin particles or the water absorbent resin composition which had passed through the sieve were measured.

Then, the blocking ratio (mass %) was calculated in accordance with the following equation. As the moisture absorption blocking ratio is lower, the water absorbent resin particles or the water absorbent resin composition is superior in terms of the fluidity at the time of moisture absorption.

$$\text{Blocking ratio (BR) (mass \%)} = \text{mass W4 (g)} / (\text{mass W4 (g)} + \text{mass W5 (g)}) \times 100$$

<Quantity of Water-soluble Component (Extractable Polymer Content)>

184.3 g of a 0.90 mass % saline was measured and poured into a 250 ml plastic container having a cover. Into the saline, 1.00 g of water absorbent resin particles or a water absorbent resin composition was added, and the saline was stirred for 16 hours by rotating a stirrer, thereby preparing a water-soluble component extract solution. The water-soluble component extract solution was filtered through a piece of filter paper (product of Advantec Toyo Kaisha, Ltd.; product name: JIS P3801, No. 2; thickness: 0.26 mm; diameter of retained particles: 5 μm), thereby obtaining a filtrate. 50.0 g of the filtrate was measured, and used as a measurement solution.

First, 0.90 mass % of the saline to which the water absorbent resin particles or the water absorbing agent had not been added was titrated by using a 0.1N NaOH solution, until pH of the saline reached 10. In this way, a titration amount ([bNaOH]ml) of 0.1N NaOH solution which was required so that pH of the saline reached 10 was measured. After that, the 0.1N HCl solution was titrated until pH of the saline reached 2.7. In this way, a titration amount ([bHCl]ml) of 0.1N HCl solution which was required so that pH of the saline reached 2.7 was measured.

The same titration was performed with respect to the measurement solution. As a result, a titration amount ([NaOH]ml) of 0.1N NaOH solution which was required so that pH of the measurement solution reached 10 was measured, and a titration amount ([HCl]ml) of 0.1 N HCl solution which was required so that pH of the measurement solution reached 2.7 was obtained.

For example, in case where a water absorbent resin composition includes a known amount of acrylic acid and its sodium chloride, it is possible to calculate a quantity of soluble component in the water absorbent resin particles or the water absorbent resin composition in accordance with the following equation. In case of an unknown quantity, an average molecular weight of the monomer is calculated in accordance with a neutralization ratio obtained by the titration.

$$\text{Quantity of soluble component (mass \%)} = 0.1 \times (\text{average molecular weight}) \times 184.3 \times 100 \times ([HCl]-[bHCl])/1000/1.0/50.0$$

$$\text{Neutralization ratio (mol \%)} = (1-([NaOH]-[bNaOH])/([HCl]-[bHCl])) \times 100$$

<Dust Quantity>

Water absorbent resin particles or a water absorbent resin composition was placed in a PE bag (No. 13, 0.03 × 260 × 380 mm) to which a static guard had been applied in advance. After being shaken 30 times, the bag was opened, and the dust quantity thereof was measured for one minute with a DIGITAL DUST INDICATOR P-5L (product of SHIBATA). This measurement was performed 10 times, thereby averaging results of the measurement. A unit of the

dust quantity is mg/$m^3$.

<Paint shaker Test>

The paint shaker test (PS) was performed as follows. 10 g of glass beads whose diameter was 6 mm and 30 g of water absorbent resin particles or a water absorbent resin composition were placed in a glass container whose diameter was 6 cm and height was 11 cm. Then, the glass container was provided on a paint shaker (product of Toyo Seiki Seisaku-syo, LTD: product No. 488), and was shaken at 800 cycle/min (CPM). An apparatus used in this test is detailed in Japanese Unexamined Patent Publication No. 235378/1997 (Tokukaihei 9-235378).

A test in which a time taken to shake the glass container was 30 minutes was a paint shaker test 1. A test in which a time taken to shake the glass container was 10 minutes was a paint shaker test 2.

After shaking the glass container, the glass beads were removed by using a JIS standard sieve (2 mm in mesh), thereby obtaining water absorbent resin particles or a water absorbent resin composition which had been damaged.

<Liquid Diffusion Velocity (LDV)>

The liquid diffusion velocity (LDV) was measured by using a diffusive absorption index measuring apparatus recited in Japanese Unexamined Patent Publication No. 200068/1993 (Tokukaihei 5/200068)(EP 532002). Note that, a trough sheet was formed with SUS 304 stainless steel at a grade of 2B.

1.00 g $\pm$ 0.005 g of the water absorbent resin composition was dispersed on trough grooves of the trough sheet provided at an angle of 20° so as to evenly cover graduations ranging from 0 to 20 cm. Further, the water absorbent resin composition was further dispersed with a paddle.

Liquid used in the diffusive absorption was obtained by coloring 1L of 0.9 wt % saline (sodium chloride aqueous solution) with 0.01 g of edible brilliant blue (product of TOKYO KASEI KOGYO CO., LTD.).

A surface level of the liquid in a liquid tank was adjusted to be 0.5 cm higher than a lowest position of the trough, and then measurement of the diffusive-absorption time (WT) was started at the same time as a stainless steel screen mesh (400 in mesh) came into contact with the liquid. The diffusive-absorption time (WT) represents a time (sec) taken to absorb the liquid in a diffusive manner up to a position corresponding to a gradation of 10 cm. Note that, a velocity at which the liquid in the liquid tank was absorbed from a lowest position of the trough in a diffusive manner up to 0.5 cm thereabove through a stainless steel screen mesh was 1.35 to 1.40 mm/s in a vertical direction.

The liquid dispersion velocity (LDV) was calculated in accordance with the following equation.

$$\text{LDV (mm/s)} = 100\ \text{(mm)}/\text{WT (s)}$$

(Production Example 1)

505.6 g of acrylic acid, 4430.8 g of 37 mass % sodium acrylate aqueous solution, 497.0 g of pure water, and 12.79 g of polyethyleneglycoldiacrylate (molecular weight was 523) were dissolved in a reactor that had been prepared by placing a lid on a 10 L stainless-steel double-arm kneader equipped with two sigma blades and a jacket, thereby obtaining a reaction solution. Then, the reaction solution was deaerated for 20 minutes in an atmosphere of nitrogen gas. Subsequently, 29.34 g of 10 mass % sodium persulfate and 24.45 g of 0.1 mass % L-ascorbic acid aqueous solution were added to the reaction solution, while the reaction solution was stirred. Approximately one minute later, polymerization was initiated. During the polymerization, the reaction solution was kept at 20°C to 95°C while the generated gel was being pulverized. After 30 minutes from the initiation of the polymerization, the cross-linked hydrogel polymer was removed from the reactor. Thus obtained cross-linked hydrogel polymer had been fragmented so that its diameter was approximately 5 mm.

The cross-linked hydrogel polymer fragmented was spread out on a wire mesh of 50 mesh, and was dried by hot air at 180°C for 50 minutes. A dry polymer thus obtained was pulverized by using a roll mill, and then classified by using a JIS standard sieve whose mesh size was 600 μm and a JIS standard sieve whose mesh size was 150 μm, thereby obtaining water absorbent resin particles (1) having an irregularly-pulverized shape. In the water absorbent resin particles (1), a centrifuge retention capacity was 33.0 g/g and water soluble component was 9.0 mass %.

In 100 parts of thus obtained water absorbent resin particles (1), a surface cross-linking agent including 0.4 parts by mass of 1,4-butanediol, 0.6 parts by mass of propyleneglycol, and 3.0 parts by mass of pure water, was mixed. The mixture was then heated at 200°C for 30 minutes. Further, the particles were disintegrated so as to pass through a JIS standard sieve whose mesh size was 600 μm. Subsequently, the particles were subjected to the paint shaker test 1, thereby obtaining water absorbent resin particles (A) whose surfaces had been cross-linked.

(Production Example 2)

A solution (A) was prepared by mixing 185.4 g of acrylic acid, 0.942 g (0.07 mol % with respect to the acrylic acid) of polyethyleneglycoldiacrylate (molecular weight was 523), and 1.13 g of 1.0 mass % diethylenetriamine penta acetic acid penta sodium salt aqueous solution with each other. Further, a solution (B) was prepared by mixing 148.53 g of 48.5 mass % sodium hydroxide aqueous solution with 159.71 g of ion exchange water whose temperature had been adjusted to 50°C. In a polypropylene container, surrounded by polystyrene foam serving as a heat insulator, which had an internal diameter of 80 mm and a capacity of 1 litter, the solution (A) and the solution (B) were quickly mixed with each other in an open manner while being stirred by a magnetic stirrer, thereby obtaining a monomer aqueous solution whose temperature had risen to approximately 100°C due to heat of neutralization and heat of dissolution.

4.29 g of 3 mass % potassium persulfate was added to thus obtained monomer aqueous solution, and the mixture was stirred for several seconds. Thereafter, the resultant was poured into a stainless tray-type container whose surface was heated up to 100°C by a hot plate (NEO HOTPLATE H1-100: product of IUCHI SEIEIDO CO., LTD.). The stainless tray-type container was internally coated with teflon (registered trademark), and its bottom size was 250 × 250 mm and top size was 640 × 640 mm and height was 50 mm so that its central cross-sectional surface was trapezoid with its top open.

Polymerization was initiated right after the monomer aqueous solution had been poured. The polymerization was promoted while generating vapors and expanding/ foaming vertically and horizontally. Thereafter, the resultant dwindled so as to be slightly larger than the bottom size. The expanding/ dwindling came to an end within approximately one minute. After the resultant had been left in the container for 4 minutes, a water-containing polymer was removed.

Thus obtained water-containing polymer was pulverized by a meat chopper (ROYAL MEAT CHOPPER VR400K: product of IIZUKA KOGYO KABUSHIKIKAISHA) whose dice diameter was 9.5 mm, thereby obtaining a water-containing polymer that had been fragmented.

The cross-linked hydrogel polymer that had been fragmented was spread out on a wire mesh of 50 mesh, and was dried by hot air at 180°C for 50 minutes. A dry polymer thus obtained was pulverized by using a roll mill, and then classified by using a JIS standard sieve whose mesh size was 850 μm and a JIS standard sieve whose mesh size was 150 μm, thereby obtaining water absorbent resin particles (2), having an irregularly pulverized shape, whose mass average particle diameter was 450 μm. In the water absorbent resin particles (2), a centrifuge retention capacity (CRC) was 36.0 g/g and a water-soluble component was 12.0 mass %.

In 100 parts by mass of thus obtained water absorbent resin particles (2), a surface cross-linking agent including 0.4 parts by mass of 1,4-butanediol, 0.6 parts by mass of propyleneglycol, and 3.0 parts by mass of pure water, was evenly mixed. The mixture was then heated at 200 ° C for 40 minutes. Further, the particles were disintegrated so as to pass through a JIS standard sieve (850 μm in mesh). Subsequently, the particles were subjected to the paint shaker test 1, thereby obtaining water absorbent resin particles (B) whose surfaces had been cross-linked.

Further, in 100 parts of thus obtained water absorbent resin particles (2), a surface cross-linking solvent including 0.4 parts by mass of 1,4-butanediol, 0.6 parts by mass of propyleneglycol, and 3.0 parts by mass of pure water, was evenly mixed. The mixture was then heated at 200° C for 30 minutes. Further, the particles were disintegrated so as to pass through a JIS standard sieve (850 μm in mesh). Subsequently, the particles were subjected to the paint shaker test 1, thereby obtaining water absorbent resin particles (C) whose surfaces had been cross-linked.

(Example 1)

An aqueous solution made of 1 part by mass of aluminum sulfate tetradeca-octadeca hydrate, 1.5 parts by mass of urea, and 1 part by mass of pure water was evenly added to 100 parts by mass of the water absorbent resin particles (A) obtained in the production example 1, and thus obtained mixture was dried at 60°C for one hour. The dried product was disintegrated so as to pass through a JIS standard sieve whose mesh size was 600 μm. Next, thus obtained composition was subjected to the paint shaker test 2. In this manner, a water absorbent resin composition (1d) was obtained.

(Example 2)

The same operation was performed as Example 1 except that an amount of the urea in the aqueous solution (A) was changed to 1.0 parts by mass, thereby obtaining a water absorbent resin composition (2d).

(Example 3)

The same operation was performed as Example 1 except that an amount of the urea in the aqueous solution (A) was changed to 2.0 parts by mass, thereby obtaining a water absorbent resin composition (3d).

(Example 4)

The same operation was performed as Example 1 except that the aqueous solution (A) of Example 1 was changed to an aqueous solution made of 1 part by mass of aluminum sulfate tetradeca-octadeca hydrate, 1 part by mass of urea, and 0.22 parts by mass of pure water, thereby obtaining a water absorbent resin composition (4d).

(Example 5)

1 part by mass of aluminum sulfate tetradeca-octadeca hydrate and 1 part by mass of urea were mixed with each other. 24 hours later, the mixture was in a liquid phase. Then, the same operation was performed as Example 1 except that the aqueous solution (A) of Example 1 was changed to 2 parts by mass of thus obtained liquid product, thereby obtaining a water absorbent resin composition (5d).

(Example 6)

The same operation was performed as Example 1 except that the aqueous solution (A) of Example 1 was changed to an aqueous solution made of 11 parts by mass of aluminum sulfate tetradeca-octadeca hydrate, 11 parts by mass of urea, and 11 parts by mass of pure water, thereby obtaining a water absorbent resin composition (6d).

(Example 7)

The same operation was performed as Example 1 except that the aqueous solution (A) of Example 1 was changed to an aqueous solution made of 1 part by mass of aluminum sulfate tetradeca-octadeca hydrate, 1 part by mass of urea, 1 part by mass of pure water, and 0.05 parts by mass of propyleneglycol, thereby obtaining a water absorbent resin composition (7d).

(Example 8)

The same operation was performed as Example 1 except that the aqueous solution (A) of Example 1 was changed to an aqueous solution made of 1 part by mass of aluminum sulfate tetradeca-octadeca hydrate, 1 part by mass of urea, 0.25 parts by mass of pure water, and 0.25 parts by mass of propyleneglycol, thereby obtaining a water absorbent resin composition (8d).

(Example 9)

An aqueous solution made of 1 part by mass of aluminum sulfate tetradeca-octadeca hydrate, 1.5 parts by mass of urea, and 1 part by mass of pure water was evenly added to 100 parts by mass of the water absorbent resin particles (1) obtained in the production example 1, and thus obtained mixture was dried at 60°C for one hour. The dried product was disintegrated so as to pass through a JIS standard sieve whose mesh size was 600 μm. Next, thus obtained composition was subjected to the paint shaker test 2. In this manner, a water absorbent resin composition (9d) was obtained.

(Example 10)

100 parts by mass of the water absorbent resin particles (A) obtained in Production Example 1 was heated at 150°C. Then, 1 part by mass of aluminum sulfate tetradeca-octadeca hydrate (its particle diameter was 600 μm or less) and 0.5 parts by mass of urea (its particle diameter was 600 μm or less) were evenly added and fusion-bonded to the heated water absorbent resin particles (A). Further, thus obtained mixture was heated at 100°C for 30 minutes, and the dried product was disintegrated so as to pass through a JIS standard sieve whose mesh size was 600 μm. In this manner, a water absorbent resin composition (10) was obtained. Next, the water absorbent resin composition (10) was subjected to the paint shaker test 2. In this manner, a water absorbent resin composition (10d) was obtained.

(Example 11)

The same operation was performed as Example 10 except that an amount of the urea of Example 10 was changed to 1.0 part by mass, thereby obtaining a water absorbent resin composition (11) and a water absorbent resin composition (11d).

(Example 12)

The same operation was performed as Example 10 except that an amount of the urea of Example 10 was changed to 1.5 parts by mass, thereby obtaining a water absorbent resin composition (12) and a water absorbent resin composition (12d).

(Example 13)

100 parts by mass of the water absorbent resin particles (A) obtained in Production Example 1, 1 part by mass of aluminum sulfate tetradeca-octadeca hydrate (its particle diameter was 600 μm or less), and 1 part by mass of urea (its particle diameter was 600 μm or less) were mixed with each other. Thus obtained mixture was heated at 140°C and then was stirred for 5 minutes so as to be fusion-bonded. Further, thus obtained composition was disintegrated so as to pass through a JIS standard sieve whose mesh size was 600 μm. In this manner, a water absorbent resin composition (13) was obtained.

(Example 14)

The same operation was performed as Example 13 except that an amount of the aluminum sulfate tetradeca-octadeca hydrate of Example 13 was changed to 11 parts by mass and an amount of the urea of Example 13 was changed to 11 parts by mass, thereby obtaining a water absorbent resin composition (14).

(Example 15)

The same operation was performed as Example 13 except that an amount of the urea of Example 13 was changed to 11 parts by mass, thereby obtaining a water absorbent resin composition (15).

(Example 16)

The same operation was performed as Example 13 except that an amount of the aluminum sulfate tetradeca-octadeca hydrate of Example 13 was changed to 11 parts by mass, thereby obtaining a water absorbent resin composition (16).

(Example 17)

The same operation was performed as Example 13 except that the water absorbent resin particles (1) was used instead of the water absorbent resin particles (A) of Example 13, thereby obtaining a water absorbent resin composition (17).

(Example 18)

The same operation was performed as Example 1 except that iron chloride (III) hexahydrate was used instead of the aluminum sulfate tetradeca-octadeca hydrate of the aqueous solution (A) of Example 1, thereby obtaining a water absorbent resin composition (18d).

(Example 19)

A surface cross-linking agent made of mixture liquid containing 0.3 parts by mass of 1,4-butanediol, 0.5 parts by mass of propyleneglycol, 2.7 parts by mass of pure water, and 1.0 parts by mass of aluminum sulfate tetradeca-octadeca hydrate was evenly mixed with 100 parts by mass of the water absorbent resin particles (1) obtained in Production Example 1. Thereafter, thus obtained mixture was heated at 200°C for 30 minutes. Then, thus obtained composition was cooled down to 60°C, and 2 parts by mass of 50 mass % urea aqueous solution was evenly mixed therewith. Thus obtained resultant was dried at 60°C for one hour. The dried product was disintegrated so as to pass through a JIS standard sieve whose mesh size was 600 μm. In this manner, a water absorbent resin composition (19) was obtained.

(Example 20)

1 part by mass of aluminum sulfate tetradeca-octadeca hydrate (its particle diameter was 600 μm or less) was

dry-blended with 100 parts by mass of the water absorbent resin particles (A) obtained in Production Example 1. Then, 2 parts by mass of 50 mass % urea aqueous solution was evenly mixed with thus obtained composition. The resultant was dried at 60°C for one hour. The dried product was disintegrated so as to pass through a JIS standard sieve whose mesh size was 600 μm. In this manner, a water absorbent resin composition (20) was obtained.

(Example 21)

1 part by mass of urea (its particle diameter was 600μ m or less) was dry-blended with 100 parts by mass of the water absorbent resin particles (A) obtained in Production Example 1. Then, aqueous solution made of 1 part by mass of aluminum sulfate tetradeca-octadeca hydrate and 1 part by mass of pure water was evenly mixed with thus obtained composition. The resultant was dried at 60°C for one hour. The dried product was disintegrated so as to pass through a JIS standard sieve whose mesh size was 600 μm. In this manner, a water absorbent resin composition (21) was obtained.

(Example 22)

Aqueous solution (A) made of 1 part by mass of aluminum sulfate tetradeca-octadeca hydrate and 1 part by mass of pure water as well as 2 parts by mass of 50 mass % urea aqueous solution were evenly mixed with 100 parts by mass of the water absorbent resin particles (A) obtained in Production Example 1. The resultant was dried at 60°C for one hour. The dried product was disintegrated so as to pass through a JIS standard sieve whose mesh size was 600 μm. In this manner, a water absorbent resin composition (22) was obtained.

(Example 23)

Aqueous solution (A) made of 1 part by mass of aluminum sulfate tetradeca-octadeca hydrate, 1.5 parts by mass of urea, and 1 part by mass of pure water was evenly added to 100 parts by mass of the water absorbent resin particles (B) obtained in Production Example 2. The resultant was dried at 60°C for one hour. The dried product was disintegrated so as to pass through a JIS standard sieve whose mesh size was 600 μm. Next, thus obtained composition was subjected to the paint shaker test 2. In this manner, a water absorbent resin composition (23d) was obtained.

(Example 24)

Aqueous solution (A) made of 1 part by mass of aluminum sulfate tetradeca-octadeca hydrate, 1.5 parts by mass of urea, and 1 part by mass of pure water was evenly added to 100 parts by mass of the water absorbent resin particles (C) obtained in Production Example 2. The resultant was dried at 60°C for one hour. The dried product was disintegrated so as to pass through a JIS standard sieve whose mesh size was 600 μm. Next, thus obtained composition was subjected to the paint shaker test 2. In this manner, a water absorbent resin composition (24d) was obtained.

(Example 25)

Aqueous solution (in which deposits occurred several hours later so that the solution was colored milky) made of 1 part by mass of aluminum sulfate tetradeca-octadeca hydrate, 0.2 parts by mass of N,N-dimethyl acetamide, and 1 part by mass of pure water was evenly added to 100 parts by mass of the water absorbent resin particles (A) obtained in Production Example 1. The resultant was dried at 60°C for one hour. The dried product was disintegrated so as to pass through a JIS standard sieve whose mesh size was 600 μm. Next, thus obtained composition was subjected to the paint shaker test 2. In this manner, a water absorbent resin composition (25d) was obtained.

(Example 26)

Aqueous solution made of 1 part by mass of aluminum sulfate tetradeca-octadeca hydrate, 0.2 parts by mass of ethylene urea, and 1 part by mass of pure water was evenly added to 100 parts by mass of the water absorbent resin particles (A) obtained in Production Example 1. The resultant was dried at 60°C for one hour. The dried product was disintegrated so as to pass through a JIS standard sieve whose mesh size was 600 μm. Next, thus obtained composition was subjected to the paint shaker test 2. In this manner, a water absorbent resin composition (26d) was obtained.

(Example 27)

Liquid product made of 1 part by mass of zirconium oxychloride octahydrate and 1 part by mass of urea was

evenly added to 100 parts by mass of the water absorbent resin particles (A) obtained in Production Example 1. The resultant was dried at 60°C for one hour. The dried product was disintegrated so as to pass through a JIS standard sieve whose mesh size was 600 μm. Next, thus obtained composition was subjected to the paint shaker test 2. In this manner, a water absorbent resin composition (27d) was obtained.

(Example 28)

1 part by mass of zirconium oxychloride octahydrate and 1 part by mass of urea were, in powder phase, added to 100 parts by mass of the water absorbent resin particles (A) obtained in Production Example 1, and sufficiently stirred with a spatula. At an initial stage of the stirring, zirconium oxychloride octahydrate and urea acted with each other, so that the water absorbent resin particles became moist. However, after being further stirred, the water absorbent resin particles became powdery. Thus obtained composition was disintegrated so as to pass through a JIS standard sieve whose mesh size was 600 μm. In this manner, a water absorbent resin composition (28) was obtained.

(Example 29)

1 part by mass of zirconium oxychloride hydrate and 2 parts by mass of urea were, in powder phase, added to 100 parts by mass of the water absorbent resin particles (A) obtained in Production Example 1, and sufficiently stirred with a spatula. At an initial stage of the stirring, zirconium oxychloride hydrate and urea acted with each other, so that the water absorbent resin particles became moist. However, after being further stirred, the water absorbent resin particles became powdery. Thus obtained composition was disintegrated so as to pass through a JIS standard sieve whose mesh size was 600 μm. In this manner, a water absorbent resin composition (29) was obtained.

(Example 30)

Liquid product made of 1 part by mass of zirconium oxychloride octahydrate and 1 part by mass of urea was evenly added to 100 parts by mass of the water absorbent resin particles (1) obtained in Production Example 1. The resultant was dried at 100°C for one hour. The dried product was disintegrated so as to pass through a JIS standard sieve whose mesh size was 600 μm. In this manner, a water absorbent resin composition (30) was obtained.

(Example 31)

Liquid product made of 1 part by mass of zirconium oxychloride octahydrate and 1 part by mass of urea was evenly added to 100 parts by mass of the water absorbent resin particles (B) obtained in Production Example 2. The resultant was dried at 60°C for one hour. The dried product was disintegrated so as to pass through a JIS standard sieve whose mesh size was 850 μm. Next, thus obtained composition was subjected to the paint shaker test 2. In this manner, a water absorbent resin composition (31 d) was obtained.

(Example 32)

1 part by mass of zirconium oxychloride octahydrate and 1 part by mass of urea were, in powder phase, added to 100 parts by mass of the water absorbent resin particles (C) obtained in Production Example 2, and sufficiently stirred with a spatula. At an initial stage of the stirring, zirconium oxychloride octahydrate and urea acted with each other, so that the water absorbent resin particles became moist. However, after being further stirred, the water absorbent resin particles became powdery. Thus obtained composition was disintegrated so as to pass through a JIS standard sieve whose mesh size was 850 μm. Next, thus obtained composition was subjected to the paint shaker test 2. In this manner, a water absorbent resin composition (32d) was obtained.

(Comparative Example 1)

The water absorbent resin particles (A) obtained in Production Example 1 were used as comparative water absorbent resin particles (1).

(Comparative Example 2)

The water absorbent resin particles (B) obtained in Production Example 2 were used as comparative water absorbent resin particles (2).

(Comparative Example 3)

The water absorbent resin particles (C) obtained in Production Example 2 were used as comparative water absorbent resin particles (3).

(Comparative Example 4)

Aqueous solution made of 1 part by mass of aluminum sulfate tetradeca-octadeca hydrate and 1 part by mass of pure water was evenly added to 100 parts by mass of the water absorbent resin particles (A) obtained in Production Example 1. The resultant was dried at 60°C for one hour. The dried product was disintegrated so as to pass through a JIS standard sieve whose mesh size was 600 μm, thereby obtaining a comparative water absorbent resin composition (4). Next, the comparative water absorbent resin composition (4) was subjected to the paint shaker test 2. In this manner, a comparative water absorbent resin composition (4d) was obtained.

(Comparative Example 5)

1 part by mass of aluminum sulfate tetradeca-octadeca hydrate (its particle diameter was 600 μm or less) was evenly dry-blended with 100 parts by mass of the water absorbent resin particles (A) obtained in Production Example 1. The resultant was dried at 60°C for one hour, thereby obtaining a comparative water absorbent resin composition (5). Next, the comparative water absorbent resin composition (5) was subjected to the paint shaker test 2. In this manner, a comparative water absorbent resin composition (5d) was obtained.

(Comparative Example 6)

100 parts by mass of the water absorbent resin particles (A) obtained in Production Example 1 was heated at 150°C. Then, 1.6 parts by mass of aluminum potassium sulfate dodeca hydrate (its particle diameter was 600 μm or less) was evenly added and fusion-bonded to the heated water absorbent resin particles (A). Further, thus obtained mixture was heated at 100°C for 30 minutes, and the dried product was disintegrated so as to pass through a JIS standard sieve whose mesh size was 600 μm. In this manner, a comparative water absorbent resin composition (6) was obtained. Next, the comparative water absorbent resin composition (6) was subjected to the paint shaker test 2. In this manner, a comparative water absorbent resin composition (6d) was obtained.

(Comparative Example 7)

7.5 g of powder of dried aluminum potassium sulfate (heated aluminum potassium sulfate) was added to 30 g of heated solution (containing 10.75 mass % of aluminum component in case of being converted to aluminum oxide) of aluminum potassium sulfate. Thereafter, thus obtained mixture was stirred, thereby obtaining evenly dispersed white slurry liquid. Next, 26.2 g of urea was added and dissolved into the slurry liquid, and 34.2 g of the water absorbent resin particles (1) obtained in Production Example 1 were added thereto, and then the slurry liquid obtained by even dispersion was poured into a dried dish, and the resultant was dried by hot air at 60°C while being unstiffened. Thus dried product was pulverized, thereby obtaining 93 g of white and odorless solid product. In this manner, a comparative water absorbent resin composition (7) was obtained.

(Comparative Example 8)

The same operation was performed as Example 7 except that the water absorbent resin particles (A) obtained in Production Example 1 were used instead of the water absorbent resin particles (1) of Example 7, thereby obtaining a water absorbent resin composition (8).

(Comparative Example 9)

A surface cross-linking agent made of mixture liquid containing 0.3 parts by mass of 1,4-butanediol, 0.5 parts by mass of propyleneglycol, 2.7 parts by mass of pure water, and 1.0 part by mass of aluminum sulfate tetradeca-octadeca hydrate was evenly mixed with 100 parts by mass of the water absorbent resin particles (1) obtained in Production Example 1. Thereafter, thus obtained mixture was heated at 200°C for 30 minutes. The heated product was disintegrated so as to pass through a JIS standard sieve whose mesh size was 600 μm. In this manner, a comparative water absorbent resin composition (9) was obtained.

(Comparative Example 10)

Aqueous solution made of 1 part by mass of zirconium oxychloride octahydrate and 1 part by mass of urea was evenly added to 100 parts by mass of the water absorbent resin particles (1) obtained in Production Example 1. The resultant was dried at 100°C for one hour. The dried product was disintegrated so as to pass through a JIS standard sieve whose mesh size was 600 μm. In this manner, a comparative water absorbent resin composition (10) was obtained.

(Comparative Example 11)

Aqueous solution made of 1 part by mass of zirconium oxychloride octahydrate and 1 part by mass of urea was evenly added to 100 parts by mass of the water absorbent resin particles (A) obtained in Production Example 1. The resultant was dried at 60°C for one hour. The dried product was disintegrated so as to pass through a JIS standard sieve whose mesh size was 600 μm. Next, thus obtained composition was subjected to the paint shaker test 2. In this manner, a comparative water absorbent resin composition (11d) was obtained.

Tables 1 and 2 show results obtained by measuring centrifuge retention capacities (CRC), absorbencies against pressure (AAP), saline flow conductivities (SFC) of the water absorbent resin compositions, the comparative water absorbent resin particles, and the comparative water absorbent resin compositions that were obtained in Examples and Comparative Examples.

Table 3 shows results obtained by measuring dust quantities of the water absorbent resin compositions (1d), (11d), the comparative water absorbent resin particles (1), the comparative water absorbent resin compositions (4d), (5d), and (6d). Further, Table 4 shows results obtained by measuring dust quantities of the water absorbent resin compositions (27d), (28), (29), the comparative water absorbent resin particles (1), and the comparative water absorbent resin composition (11d).

Further, Table 5 shows results obtained by measuring dust quantities of the water absorbent resin composition (19) and the comparative water absorbent resin composition (9).

Table 6 shows results obtained by measuring blocking ratios (BR) of the water absorbent resin compositions (1d), (8d), (11d), (27d), (28), the comparative water absorbent resin compositions (1), (2), and (3).

Table 7 shows mass average particle diameters (D50) and particle size distribution logarithmic standard deviations (σζ) of the water absorbent resin particles (A), (C), the water absorbent resin compositions (1d), (24d), (27d), and (32d).

Table 8 shows results obtained by measuring liquid dispersion velocities (LDV) of the water absorbent resin composition (1d), the comparative water absorbent resin particles (1), and the comparative water absorbent resin composition (4d).

Table 1

| | CRC (g/g) | AAP (g/g) | SFC ($\times 10^{-7} \cdot cm^3 \cdot s \cdot g^{-1}$) |
|---|---|---|---|
| Water absorbent resin composition (1d) | 25.2 | 22.5 | 171 |
| Water absorbent resin composition (2d) | 25.4 | 22.1 | 127 |
| Water absorbent resin composition (3d) | 25.0 | 22.0 | 138 |
| Water absorbent resin composition (4d) | 25.5 | 23.2 | 127 |
| Water absorbent resin composition (5d) | 25.6 | 23.3 | 128 |
| Water absorbent resin composition (6d) | 18.3 | 15.3 | 248 |
| Water absorbent resin composition (7d) | 25.3 | 22.5 | 143 |
| Water absorbent resin composition (8d) | 25.5 | 22.6 | 145 |
| Water absorbent resin composition (9d) | 30.3 | 9.7 | 3 |
| Water absorbent resin composition (10) | 25.6 | 22.8 | 145 |
| Water absorbent resin composition (10d) | 25.7 | 22.8 | 147 |
| Water absorbent resin composition (11) | 25.5 | 22.5 | 147 |
| Water absorbent resin composition (11d) | 25.5 | 22.6 | 155 |
| Water absorbent resin composition (12) | 25.5 | 22.4 | 146 |

(continued)

| | CRC (g/g) | AAP (g/g) | SFC ($\times 10^{-7} \cdot cm^3 \cdot s \cdot g^{-1}$) |
|---|---|---|---|
| Water absorbent resin composition (12d) | 25.6 | 22.7 | 148 |
| Water absorbent resin composition (13) | 25.4 | 22.7 | 138 |
| Water absorbent resin composition (14) | 21.6 | 16.1 | 109 |
| Water absorbent resin composition (15) | 25.3 | 19.9 | 129 |
| Water absorbent resin composition (16) | 23.4 | 17.1 | 122 |
| Water absorbent resin composition (17) | 32.9 | 9.4 | 0 |

Table 2

| | CRC (g/g) | AAP (g/g) | SFC ($\times 10^{-7} \cdot cm^3 \cdot s \cdot g^{-1}$) |
|---|---|---|---|
| Water absorbent resin composition (18d) | 25.1 | 21.3 | 118 |
| Water absorbent resin composition (19) | 25.9 | 22.7 | 135 |
| Water absorbent resin composition (20) | 25.1 | 22.3 | 155 |
| Water absorbent resin composition (21) | 25.2 | 22.0 | 132 |
| Water absorbent resin composition (22) | 25.1 | 21.8 | 128 |
| Water absorbent resin composition (23d) | 28.0 | 22.8 | 140 |
| Water absorbent resin composition (24d) | 30.2 | 23.2 | 57 |
| Water absorbent resin composition (25d) | 23.5 | 21.5 | 131 |
| Water absorbent resin composition (26d) | 23.5 | 21.5 | 136 |
| Water absorbent resin composition (27d) | 25.4 | 21.4 | 130 |
| Water absorbent resin composition (28) | 25.3 | 20.5 | 136 |
| Water absorbent resin composition (29) | 25.3 | 20.8 | 110 |
| Water absorbent resin composition (30) | 30.1 | 13.3 | 3 |
| Water absorbent resin composition (31d) | 27.7 | 22.3 | 86 |
| Water absorbent resin composition (32d) | 30.2 | 22.8 | 44 |
| Comparative water absorbent resin particles (1) | 25.8 | 23.6 | 64 |
| Comparative water absorbent resin particles (2) | 28.5 | 24.9 | 51 |
| Comparative water absorbent resin particles (3) | 30.7 | 25.4 | 26 |
| Comparative water absorbent resin composition (4) | 25.2 | 21.7 | 121 |
| Comparative water absorbent resin composition (4d) | 25.3 | 21.6 | 109 |
| Comparative water absorbent resin composition (5) | 25.5 | 23.2 | 158 |
| Comparative water absorbent resin composition (5d) | 25.5 | 22.8 | 144 |
| Comparative water absorbent resin composition (6) | 25.4 | 22.8 | 95 |
| Comparative water absorbent resin composition (6d) | 25.5 | 22.7 | 68 |
| Comparative water absorbent resin composition (7) | 6.7 | 4.1 | 135 |
| Comparative water absorbent resin composition (8) | 5.6 | 4.4 | 154 |
| Comparative water absorbent resin composition (9) | 25.8 | 22.1 | 121 |

(continued)

| | CRC (g/g) | AAP (g/g) | SFC ($\times 10^{-7} \cdot cm^3 \cdot s \cdot g^{-1}$) |
|---|---|---|---|
| Comparative water absorbent resin composition (10) | 30.7 | 8.7 | 0 |
| Comparative water absorbent resin composition (11d) | 25.6 | 23.3 | 100 |

Table 3

| | Dust quantity ($mg/m^3$) |
|---|---|
| Water absorbent resin composition (1d) | 0.23 |
| Water absorbent resin composition (11d) | 0.24 |
| Comparative water absorbent resin particles (1) | 0.35 |
| Comparative water absorbent resin composition (4d) | 0.68 |
| Comparative water absorbent resin composition (5d) | 1.24 |
| Comparative water absorbent resin composition (6d) | 1.94 |

Table 4

| | Dust quantity ($mg/m^3$) |
|---|---|
| Water absorbent resin composition (27d) | 0.19 |
| Water absorbent resin composition (28) | 0.18 |
| Water absorbent resin composition (29) | 0.22 |
| Comparative water absorbent resin particles (1) | 0.35 |
| Comparative water absorbent resin composition (11d) | 0.41 |

Table 5

| | Dust quantity ($mg/m^3$) |
|---|---|
| Water absorbent resin composition (19) | 0.98 |
| Comparative water absorbent resin composition (9) | 13.4 |

Table 6

| | Blocking ratio (BR) (%) |
|---|---|
| Water absorbent resin composition (1d) | 0 |
| Water absorbent resin composition (8d) | 0 |
| Water absorbent resin composition (11d) | 4 |
| Water absorbent resin composition (27d) | 0 |
| Water absorbent resin composition (28) | 8 |
| Comparative water absorbent resin particles (1) | 84 |

(continued)

| | Blocking ratio (BR) (%) |
|---|---|
| Comparative water absorbent resin particles (2) | 38 |
| Comparative water absorbent resin particles (3) | 45 |

| | Water absorbent resin particles (A) | Water absorbent resin particles (C) | Water absorbent resin composition (1d) | Water absorbent resin composition (24d) | Water absorbent resin composition (27d) | Water absorbent resin composition (32d) |
|---|---|---|---|---|---|---|
| 850 μm or more (mass %) | 0.0 | 0.0 | 0.0 | 0.0 | 0.0 | 0.0 |
| 850 to 710 μm (mass %) | 0.0 | 2.5 | 0.0 | 2.7 | 0.0 | 3.0 |
| 710 to 600 μm (mass %) | 0.0 | 25.7 | 0.1 | 26.1 | 0.0 | 27.0 |
| 600 to 500 μm (mass %) | 3.2 | 17.1 | 3.2 | 17.3 | 3.8 | 18.0 |
| 500 to 425 μm (mass %) | 18.1 | 13.8 | 18.4 | 13.9 | 18.8 | 13.4 |
| 425 to 300 μm (mass %) | 38.4 | 23.1 | 38.7 | 23.0 | 38.9 | 22.4 |
| 300 to 212 μm (mass %) | 25.4 | 11.2 | 25.5 | 10.8 | 24.6 | 10.2 |
| 212 to 150 μm (mass %) | 13.0 | 4.2 | 12.5 | 4.1 | 12.1 | 3.9 |
| 150 to 45 μm (mass %) | 1.8 | 2.3 | 1.6 | 2.1 | 1.7 | 2.0 |
| 45 μm or less (mass %) | 0.1 | 0.1 | 0.0 | 0.0 | 0.1 | 0.1 |
| Total (mass %) | 100.0 | 100.0 | 100.0 | 100.0 | 100.0 | 100.0 |
| D50 (μm) | 326 | 473 | 328 | 478 | 331 | 488 |
| σζ | 0.35 | 0.40 | 0.35 | 0.39 | 0.35 | 0.38 |

The water absorbent resin composition obtained in the present invention has a superior water absorbing property. Thus, the water absorbent resin composition can be used as a water absorbing/retaining agent in various use. For example, it is possible to use the water absorbing agent in: absorbing article water absorbing/retaining agents such as

a disposable diaper, a sanitary napkin, an incontinence pad, and a medical pad; agriculture/horticulture water retaining agents such as an alternative bog moss, a soil reforming/improving agent, a water retaining agent, and an agrichemical effect maintaining agent; architectural water retaining agents such as an interior wall condensation preventing agent, and a cement additive; a release control agent; a cold insulation agent; a disposable body warmer; a sewage coagulator; a food freshness maintaining agent; an ion exchange column material; a sludge or oil dehydrating agent; a desiccating agent; a humidity controlling agent; and the like. Further, the water absorbing agent obtained in the present invention is favorably used in an absorbing sanitary material, such as a disposable diaper and a sanitary napkin, which absorbs feces, urine, and blood.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

## Claims

1. A water absorbent resin composition, comprising water absorbent resin particles having a cross-linked structure, which is formed by subjecting the water absorbent resin composition particles to a surface cross-linking or a heating treatment, wherein
a water-soluble unsaturated monomer;
a nitrogenous ketone compound (A) which contains no carboxyl group having a structure represented by formula (1)

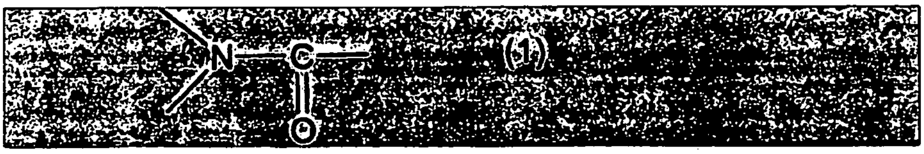

(1)

; and
a bivalent and/or trivalent and/or tetravalent water-soluble metal salt are polymerized,
wherein a total amount of the nitrogenous ketone compound (A) and the bivalent and/or trivalent and/or tetravalent water-soluble metal salt ranges from 0.01 to 100 parts by mass of the water absorbent resin particles,
wherein the water-soluble unsaturated monomer contains 50 mol% or more of acrylic acid and/or salt thereof and wherein the centrifuge retention capacity (CRC) is 5 g/g or more.

2. The water absorbent resin composition as set forth in claim 1, wherein the nitrogenous ketone compound (A) is a urea and/or a derivative thereof which has a structure represented by formula (2):

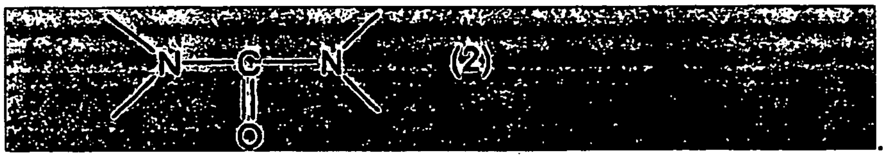

(2)

3. The water absorbent resin composition as set forth in claim 1 or 2, wherein at least a part of surfaces of the water absorbent resin particles is coated with the nitrogenous ketone compound (A) and the bivalent and/or trivalent and/or tetravalent water-soluble metal salt.

4. The water absorbent resin composition as set forth in any one of claims 1 to 3, wherein an absorbency against pressure (AAP) is 15 (g/g) or more where the pressure is 4.83 kPa.

5. The water absorbent resin composition as set forth in any one of claims 1 to 4, wherein a saline flow conductivity (SFC) is 30(x $10^{-7}$ $cm^3$ s $g^{-1}$) or more.

6. A method for producing a water absorbent resin composition including water absorbent resin particles having a crosslinked structure, which is formed by subjecting the water absorbent resin composition particles to a surface cross-linking or a heat treatment, wherein a water-soluble unsaturated monomer;

a nitrogenous ketone compound (A) which contains no carboxyl group having a structure represented by formula (1)

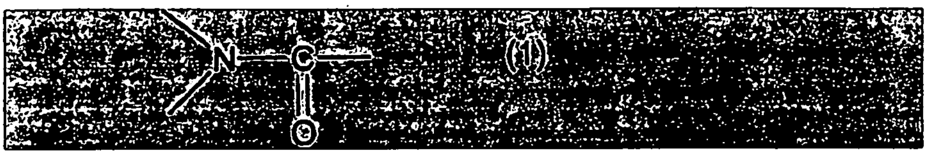

; and
a bivalent and/or trivalent and/or tetravalent water-soluble metal salt are polymerized,
said method comprising the step of mixing the water absorbent resin particles, the nitrogenous ketone compound (A), and the bivalent and/or trivalent and/or tetravalent water-soluble metal salt so that a total amount of the nitrogenous ketone compound (A) and the bivalent and/or trivalent and/or tetravalent water-soluble metal salt ranges from 0.01 to 100 parts by mass with respect to 100 parts by mass of the water absorbent resin particles,
wherein the water-soluble unsaturated monomer contains 50 mol% or more of acrylic acid and/or salt thereof and wherein the centrifuge retention capacity (CRC) is 5 g/g or more.

7. The method as set forth in claim 6, comprising the step of mixing powder of the multivalent water-soluble metal salt, powder of the nitrogenous ketone compound (A), and water the absorbent resin particles.

8. The method as set forth in claim 6, comprising the step of mixing (i) a liquid product containing a nitrogenous ketone compound (A) and the multivalent water-soluble metal salt and (ii) the water absorbent resin particles.

9. The method as set forth in claim 6, comprising the step of mixing an aqueous solution containing the nitrogenous ketone compound (A), an aqueous solution containing the multivalent water-soluble metal salt, and water absorbent resin particles.

10. The method as set forth in claim 6, comprising the steps of:

mixing (i) one of a nitrogenous ketone compound (A) and the multivalent water-soluble metal salt as an aqueous solution and (ii) water absorbent resin particles; and
dry blending an other of the nitrogenous ketone compound (A) and the multivalent water-soluble metal salt with the water absorbent resin particles.

11. The method as set forth in any one of claims 6 to 10, wherein the nitrogenous ketone compound (A) is a urea and/or a derivative thereof which has a structure represented by formula (2):

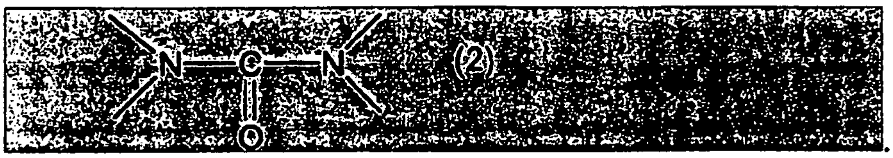

## Patentansprüche

1. Wasser absorbierende Harzzusammensetzung, mit Wasser absorbierenden Harzpartikeln mit einer vernetzten Struktur, die **dadurch** gebildet ist, dass die Partikel der Wasser absorbierenden Harzzusammensetzung einer Oberflächenvernetzung oder einer Wärmebehandlung unterzogen werden, wobei
ein wasserlösliches ungesättigtes Monomer;
eine stickstoffhaltige Ketonverbindung (A), die keine Carboxylgruppe aufweist, mit einer in Formel (1) dargestellten Struktur:

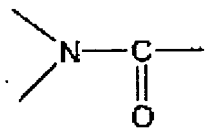

(1)

;

und

ein zweiwertiges und/oder dreiwertiges und/oder vierwertiges wasserlösliches Metallsalz polymerisiert werden, wobei eine Gesamtmenge der stickstoffhaltigen Ketonverbindung (A) und des zweiwertigen und/oder dreiwertigen und/oder vierwertigen wasserlöslichen Metallsalzes 0.01 bis 100 Masseteile der Wasser absorbierenden Harzpartikel beträgt,

wobei das wasserlösliche ungesättigte Monomer 50 mol% oder mehr an Acrylsäure und/oder deren Salz enthält und wobei die Zentrifugenretentionskapazität (CRC) 5g/g oder mehr beträgt.

**2.** Wasser absorbierende Harzzusammensetzung nach Anspruch 1, wobei die stickstoffhaltige Ketonverbindung (A) ein Harnstoff und/oder ein Derivat davon ist, das eine durch Formel (2) dargestellte Struktur aufweist:

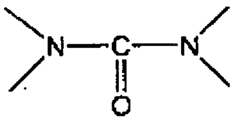

(2)

.

**3.** Wasser absorbierende Harzzusammensetzung nach Anspruch 1 oder 2, wobei wenigstens ein Teil von Oberflächen der Wasser absorbierenden Harzpartikel mit der stickstoffhaltigen Ketonverbindung (A) und dem zweiwertigen und/oder dreiwertigen und/oder vierwertigen wasserlöslichen Metallsalz beschichtet ist.

**4.** Wasser absorbierende Harzzusammensetzung nach einem der Ansprüche 1 bis 3, wobei ein Absorptionsvermögen gegen Druck (AAP) bei einem Druck von 4,83 kPa 15 (g/g) oder mehr beträgt.

**5.** Wasser absorbierende Harzzusammensetzung nach einem der Ansprüche 1 bis 4, wobei eine Saline Flow Conductivity (SFC) 30 (x $10^{-7}$ $cm^3$ s $g^{-1}$) oder mehr beträgt.

**6.** Verfahren zum Herstellen einer Wasser absorbierenden Harzzusammensetzung mit Wasser absorbierenden Harzpartikeln mit einer vernetzten Struktur, die **dadurch** gebildet ist, dass die Partikel der Wasser absorbierenden Harzzusammensetzung einer Oberflächenvernetzung oder einer Wärmebehandlung unterzogen werden, wobei ein wasserlösliches ungesättigtes Monomer;

eine stickstoffhaltige Ketonverbindung (A), die keine Carboxylgruppe aufweist, mit einer in Formel (1) dargestellten Struktur:

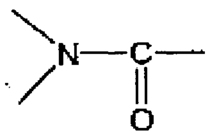

(1)

;

und

ein zweiwertiges und/oder dreiwertiges und/oder vierwertiges wasserlösliches Metallsalz polymerisiert werden,

wobei das Verfahren den Schritt eines Vermischens der Wasser absorbierenden Harzpartikel, der stickstoffhaltigen Ketonverbindung (A) und des zweiwertigen und/oder dreiwertigen und/oder vierwertigen wasserlöslichen Metallsalzes aufweist, so dass eine Gesamtmenge der stickstoffhaltigen Ketonverbindung (A) und des zweiwertigen und/ oder dreiwertigen und/oder vierwertigen wasserlöslichen Metallsalzes 0.01 bis 100 Masseteile bezogen auf 100 Masseteile der Wasser absorbierenden Harzpartikel beträgt,
wobei das wasserlösliche ungesättigte Monomer 50 mol% oder mehr an Acrylsäure und/oder deren Salz enthält und wobei die Zentrifugenretentionskapazität (CRC) 5g/g oder mehr beträgt.

**7.** Verfahren nach Anspruch 6, das einen Schritt zum Vermischen eines Pulvers des mehrwertigen wasserlöslichen Metallsalzes, eines Pulvers der stickstoffhaltigen Ketonverbindung (A) und der Wasser absorbierenden Harzpartikel aufweist.

**8.** Verfahren nach Anspruch 6, das einen Schritt zum Vermischen (i) eines eine stickstoffhaltige Ketonverbindung (A) enthaltenden flüssigen Produkts, und (ii) der Wasser absorbierenden Harzpartikel aufweist.

**9.** Verfahren nach Anspruch 6, das einen Schritt zum Vermischen einer die stickstoffhaltige Ketonverbindung (A) enthaltenden wässrigen Lösung, einer das mehrwertige wasserlösliche Metallsalz enthaltenden wässrigen Lösung und Wasser absorbierender Harzpartikel aufweist.

**10.** Verfahren nach Anspruch 6, das die folgenden Schritte enthält:

Vermischen (i) einen der Stoffe der stickstoffhaltigen Ketonverbindung (A) oder des mehrwertigen wasserlöslichen Metallsalzes als eine wässrige Lösung mit (ii) Wasser absorbierenden Harzpartikeln; und
Trockenvermischen des anderen der Stoffe der stickstoffhaltigen Ketonverbindung (A) oder des mehrwertigen wasserlöslichen Metallsalzes mit den Wasser absorbierenden Harzpartikeln.

**11.** Verfahren nach einem der Ansprüche 6 bis 10, wobei die stickstoffhaltige Ketonverbindung (A) ein Harnstoff und/ oder ein Derivat dessen ist, mit einer in Formel (2) dargestellten Struktur:

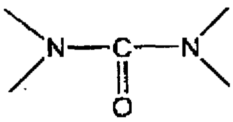 (2)

.

## Revendications

**1.** Composition de résine absorbant l'eau, comprenant des particules de résine absorbant l'eau ayant une structure réticulée, qui est formée en soumettant les particules de composition de résine absorbant l'eau à une réticulation de surface ou à un traitement thermique, dans laquelle
un monomère non saturé hydrosoluble ;
un composé de cétone azoté (A) qui ne contient pas de groupe carboxyle ayant une structure représentée par la formule (1) :

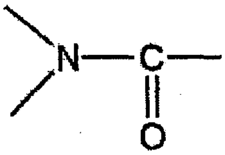 (1)

et
un sel métallique hydrosoluble bivalent et/ou trivalent et/ou tétravalent sont polymérisés,
dans laquelle une quantité totale du composé de cétone azoté (A) et du sel métallique hydrosoluble bivalent et/ou trivalent et/ou tétravalent varie de 0,01 à 100 parties en masse des particules de résine absorbant l'eau,
dans laquelle le monomère non saturé hydrosoluble contient 50 % mol ou plus d'acide acrylique et/ou d'un sel de ce dernier et dans laquelle la capacité de rétention centrifuge (CRC) est de 5 g/g ou plus.

**2.** Composition de résine absorbant l'eau selon la revendication 1, dans laquelle le composé de cétone azoté (A) est une urée et/ou un dérivé de cette dernière qui a une structure représentée par la formule (2) :

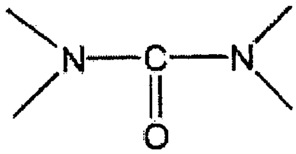

(2)

**3.** Composition de résine absorbant l'eau selon la revendication 1 ou 2, dans laquelle au moins une partie des surfaces des particules de résine absorbant l'eau est recouverte du composé de cétone azoté (A) et du sel métallique hydrosoluble bivalent et/ou trivalent et/ou tétravalent.

**4.** Composition de résine absorbant l'eau selon l'une quelconque des revendications 1 à 3, dans laquelle un pouvoir absorbant par rapport à la pression (AAP) est de 15 (g/g) ou plus lorsque la pression est de 4,83 kPa.

**5.** Composition de résine absorbant l'eau selon l'une quelconque des revendications 1 à 4, dans laquelle une conductivité d'un écoulement de solution saline (SFC) est de 30 ($\times$ $10^{-7}$ $cm^3$ s $g^{-1}$) ou plus.

**6.** Procédé de production d'une composition de résine absorbant l'eau incluant des particules de résine absorbant l'eau ayant une structure réticulée, qui est formée en soumettant les particules de composition de résine absorbant l'eau à une réticulation de surface ou à un traitement thermique, dans laquelle un monomère non saturé hydrosoluble ; un composé de cétone azoté (A) qui ne contient pas de groupe carboxyle ayant une structure représentée par la formule (1) :

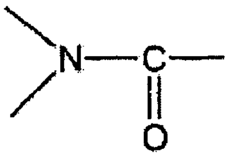

(1)

et
un sel métallique hydrosoluble bivalent et/ou trivalent et/ou tétravalent sont polymérisés,
ledit procédé comprenant l'étape de mélanger les particules de résine absorbant l'eau, le composé de cétone azoté (A) et le sel métallique hydrosoluble bivalent et/ou trivalent et/ou tétravalent de sorte qu'une quantité totale du composé de cétone azoté (A) et du sel métallique hydrosoluble bivalent et/ou trivalent et/ou tétravalent varie de 0,01 à 100 parties en masse par rapport à 100 parties en masse des particules de résine absorbant l'eau,
dans laquelle le monomère non saturé hydrosoluble contient 50 % mol ou plus d'acide acrylique et/ou d'un sel de ce dernier et dans laquelle la capacité de rétention centrifuge (CRC) est de 5 g/g ou plus.

**7.** Procédé selon la revendication 6, comprenant l'étape de mélanger une poudre du sel métallique hydrosoluble multivalent, une poudre du composé de cétone azoté (A), et les particules de résine absorbant l'eau.

**8.** Procédé selon la revendication 6, comprenant l'étape de mélanger (i) un produit liquide contenant un composé de cétone azoté (A) et le sel métallique hydrosoluble multivalent et (ii) les particules de résine absorbant l'eau.

**9.** Procédé selon la revendication 6, comprenant l'étape de mélanger une solution aqueuse contenant le composé de cétone azoté (A), une solution aqueuse contenant le sel métallique hydrosoluble multivalent et des particules de résine absorbant l'eau.

**10.** Procédé selon la revendication 6, comprenant les étapes de :

mélanger (i) l'un d'un composé de cétone azoté (A) et du sel métallique hydrosoluble multivalent en tant que solution aqueuse et (ii) des particules de résine absorbant l'eau ; et

mélanger à sec un autre du composé de cétone azoté (A) et du sel métallique hydrosoluble multivalent avec les particules de résine absorbant l'eau.

**11.** Procédé selon l'une quelconque des revendications 6 à 10, dans lequel le composé de cétone azoté (A) est une urée et/ou un dérivé de cette dernière qui a une structure représentée par la formule (2) :

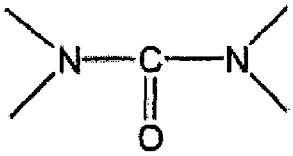

(2)

FIG. 1

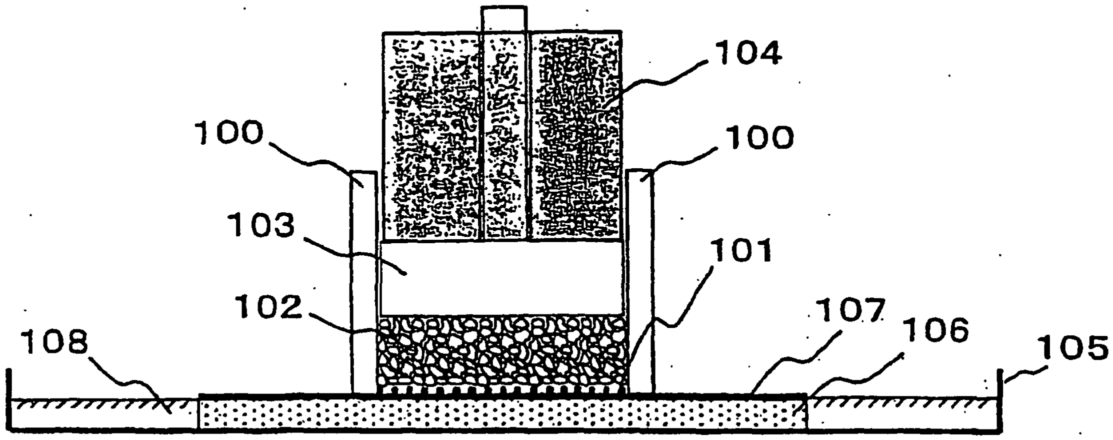
104
100
100
103
101
102
107
108
106
105

FIG. 2

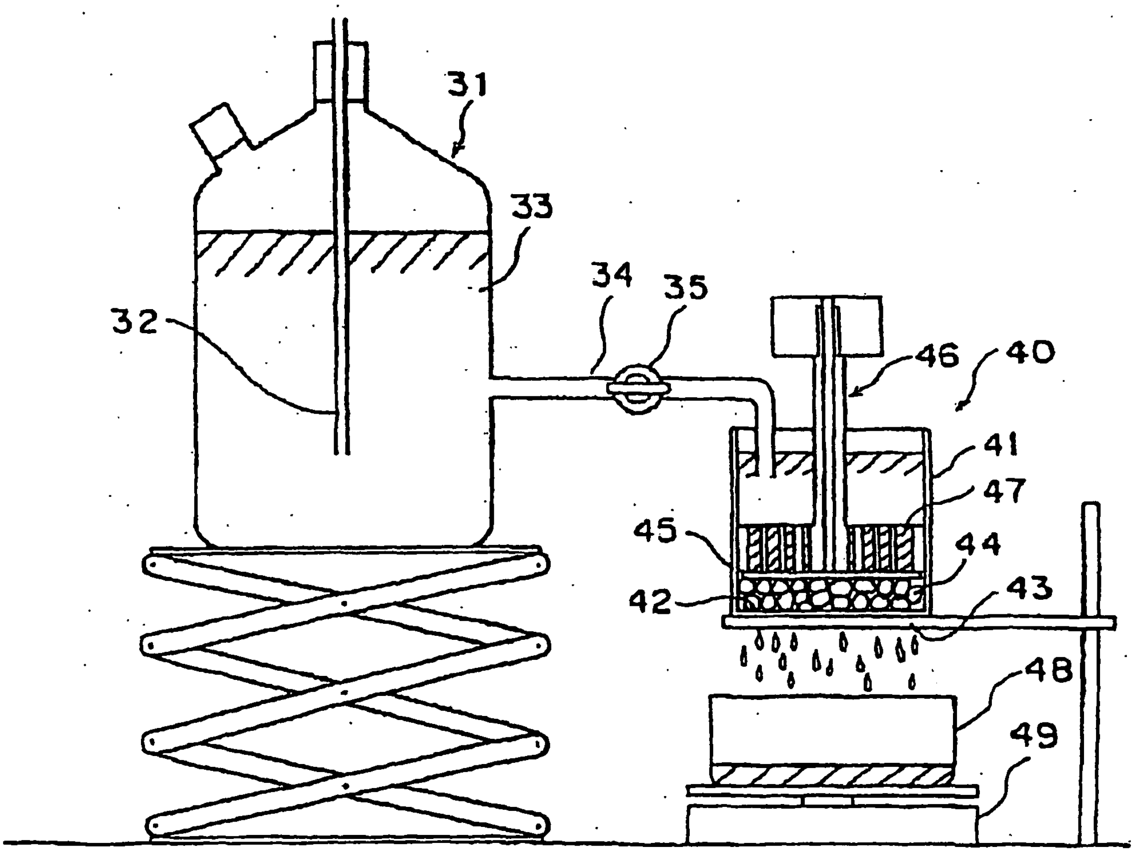
31
33
34
35
32
46
40
41
47
45
44
42
43
48
49

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 62007745 A
- JP TOKUKAISHO627745 B
- JP 63270741 A
- JP TOKUKAISHO63270741 B
- JP 1056707 A
- JP TOKUKAISHO6456707 B
- JP 9124879 A
- JP TOKUKAIHEI9124879 B
- JP 2001096151 A
- JP TOKUKAI200196151 B
- WO 9849221 A
- WO 200053644 A
- WO 200053664 A
- WO 200174913 A
- US 20020128618 A
- JP 61257235 A
- JP TOKUKAISHO61257235 B
- JP 10048857 A
- WO 9638296 A
- US 5684072 A
- US 5371148 A
- EP 0481443 A
- EP 0461613 A
- US 4880455 A
- US 4416711 A
- US 4224427 A
- JP 2003306609 A
- JP TOKUKAI2003306609 B
- JP 10273602 A
- JP TOKUKAIHEI10273602 B
- US 4625001 A
- US 4654039 A
- US 5250640 A
- US 5275773 A
- EP 456136 A
- US 4076663 A
- US 4124748 A
- US 3959569 A
- US 3935099 A
- US 4769427 A
- US 4873299 A
- US 4093776 A
- US 4367323 A
- US 4446261 A
- US 4683274 A
- US 4690996 A
- US 4721647 A
- US 4738867 A
- US 4748076 A
- EP 1178059 A
- EP 0668080 A
- EP 530517 A
- EP 603292 A
- EP 9505856 A
- US 6228930 B
- US 5264495 A
- EP 844270 A
- US 4950692 A
- US 5478879 A
- JP 9509591 A
- JP TOKUHYOUHEI9509591 B
- JP 9290000 A
- JP TOKUHYOHEI9509591 B
- JP 9235378 A
- JP TOKUKAIHEI9235378 B
- JP 5200068 A
- JP TOKUKAIHEI5200068 B
- EP 532002 A